# EUROPEAN PATENT APPLICATION

(11) **EP 4 706 873 A1**
(43) Date of publication of application: **11.03.2026**
(21) Application number: 24814946.0
(22) Date of filing: 26.03.2024
(51) Int. Cl.: B23K 35/363, B22F 1/00, B23K 35/26, C22C 12/00

(54) **FLUX AND SOLDER PASTE**

(30) Priority: 31.05.2023 JP 2023090350
(71) Applicant: Senju Metal Industry Co., Ltd., Tokyo 120-8555 (JP)
(72) Inventor: UKAI, Ryuji, Tokyo 120-8555 (JP); TAKAGI, Tomoko, Tokyo 120-8555 (JP); SAKUMA, Haruya, Tokyo 120-8555 (JP); YOSHIDA, Hisahiko, Tokyo 120-8555 (JP); KOGA, Shunsuke, Tokyo 120-8555 (JP); OKA, Naomasa, Tokyo 120-8555 (JP); MORI, Jotaro, Tokyo 120-8555 (JP)
(74) Representative: Lavoix
(86) International application number: PCT/JP2024/011860
(87) International publication number: WO 2024/247459

(57) **Abstract**

A flux according to the present invention contains rosin, a polymer (P) having a repeating unit represented by General Formula (p1), a solvent, a thixotropic agent containing polyamide, a specific dicarboxylic acid, and a specific compound having a benzotriazole skeleton. In General Formula (p1), R¹ represents a methyl group or a hydrogen atom. R² represents a hydrocarbon group having 1 or 2 carbon atoms or a hydrogen atom. According to such a flux, the cohesiveness of the solder alloy powder is high during reflow, the blackening of flux residue is suppressed, and the precipitation with time is unlikely to occur, and the favorable temporal stability can be provided.

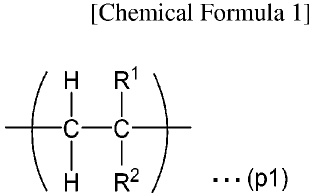

## Description

### TECHNICAL FIELD

The present invention relates to a flux and a solder paste.

Priority is claimed on Japanese Patent Application No. 2023-090350, filed May 31, 2023, the content of which is incorporated herein by reference.

### BACKGROUND ART

In mounting electronic components and the like, fixing of components to a board and electrical connection of components to a board are generally performed by soldering. In soldering, a flux, a solder alloy, and a solder paste in which a flux and a solder alloy powder are mixed are used. A flux has the effect of chemically removing metal oxides present on the metal surface of an object to be joined, which is a soldering target, and on a solder alloy, thereby enabling the movement of metal elements at the boundary between the metal surface of the object to be joined and the solder. Therefore, by performing soldering using the flux, an intermetallic compound is formed between the metal surface of the object to be joined and the solder. Thereby, strong joining can be obtained.

In soldering, a method such as flow soldering or reflow soldering is adopted depending on the size of an object to be joined and the like.

In the flow soldering, first, the flux is applied onto a board on which a component has been mounted. Next, the soldering is performed by bringing the molten solder jetted from below into contact with the soldering surface while transporting the board on which the component is mounted.

In reflow soldering, first, a solder paste is printed on a board. Next, the component is mounted, and the board on which the component is mounted is heated in a heating furnace called a reflow furnace to perform soldering.

In recent years, in soldering, lead-free solders have been used in consideration of adverse effects on the environment. Since the lead-free solder containing Sn as a main component has a high melting point, it is necessary to heat the lead-free solder to a higher temperature to melt the lead-free solder during soldering. The higher the temperature of molten solder is, the more oxides are likely to be generated.

On the other hand, from the viewpoint of reducing thermal damage to the board, energy conservation, and the like, a solder alloy containing Sn and Bi that allows soldering under lower temperature conditions has been increasingly used. In a case of using the solder alloy containing Sn and Bi, since Bi is a metal element that is easily oxidized, a flux corresponding thereto has been proposed so far (for example, see Patent document 1).

### Citation List

### Patent Document

Patent Document 1: Japanese Patent No. 7075028

### SUMMARY OF INVENTION

### Technical Problem

In the solder paste, during reflow in reflow soldering, in a case where the solder alloy powder is melted, it is desirable that the solder alloy powder have high cohesiveness (that solder balls are less likely to occur).

The cohesiveness of solder alloy powder is evaluated by "4.2 Solder Ball Test" of JIS Z 3284-4:2014. When the cohesiveness of the solder alloy powder is low during reflow, solder balls are likely to occur. Solder balls may cause a short circuit of an electric circuit on the board.

As a result of the studies, the present inventors have found that a dicarboxylic acid is effective as an activator blended in the flux with respect to the cohesiveness of the solder alloy powder.

However, in a case where a flux containing a dicarboxylic acid is used in a solder paste, after reflow, the flux residue at a soldered portion discolors black over time, and there is a possibility of a decrease in electrical reliability.

As a result of further studies, the present inventors have found that it is effective to use a compound having a benzotriazole skeleton in combination with respect to the blackening of the flux residue.

However, in the flux in which the dicarboxylic acid and the compound having a benzotriazole skeleton are used in combination, there is a new issue that precipitation of the compound having a benzotriazole skeleton is likely to occur in the flux over time.

The present invention has been made in view of the above circumstances, provides a flux in which cohesiveness of a solder alloy powder is high during reflow, blackening of flux residue is suppressed, precipitation with time is unlikely to occur, and temporal stability is good, and provides a solder paste using the flux.

### Solution to Problem

In order to achieve the above-described object, the present invention adopts the following configurations.

[1] A flux containing rosin, a polymer (P) having a repeating unit represented by General Formula (p1), a solvent, a thixotropic agent, a dicarboxylic acid, and a compound having a benzotriazole skeleton. 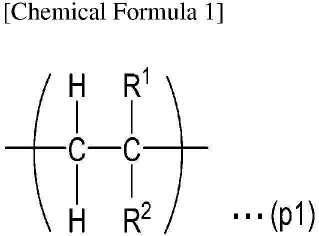 [In the formula, R¹ represents a methyl group or a hydrogen atom. R² represents a hydrocarbon group having 1 or 2 carbon atoms or a hydrogen atom.]
[2] The flux according to [1], in which a weight-average molecular weight of the polymer (P) is 300 to 8,000.
[3] The flux according to [1] or [2], in which a content of the polymer (P) is 1% by mass or more and 15% by mass or less with respect to a total mass of the flux.
[4] The flux according to any one of [1] to [3], in which the solvent includes propylene glycol monoalkyl ether.
[5] The flux according to [4], in which the propylene glycol monoalkyl ether includes at least one selected from the group consisting of tripropylene glycol butyl ether and dipropylene glycol butyl ether.
[6] The flux according to [4] or [5], in which a content of the propylene glycol monoalkyl ether is 5% by mass or more and 50% by mass or less with respect to a total mass of the flux.
[7] The flux according to any one of [4] to [6], in which a mixing ratio of the polymer (P) and the propylene glycol monoalkyl ether is 0.05 or more as a mass ratio represented by the polymer (P)/the propylene glycol monoalkyl ether.
[8] The flux according to any one of [1] to [7], in which the dicarboxylic acid is a compound represented by General Formula (c1). 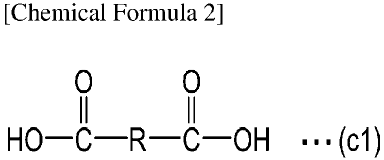 [In the formula, R represents an alkylene group having 1 to 10 carbon atoms, a phenylene group, or a single bond, provided that a methylene group constituting the alkylene group may be substituted with an oxygen atom.]
[9] The flux according to any one of [1] to [8], in which a content of the dicarboxylic acid is 0.5% by mass or more and 7.5% by mass or less with respect to a total mass of the flux.
[10] The flux according to any one of [1] to [9], in which the compound having a benzotriazole skeleton is at least one selected from the group consisting of a compound represented by General Formula (AZ1-1) and a compound represented by General Formula (AZ1-2). 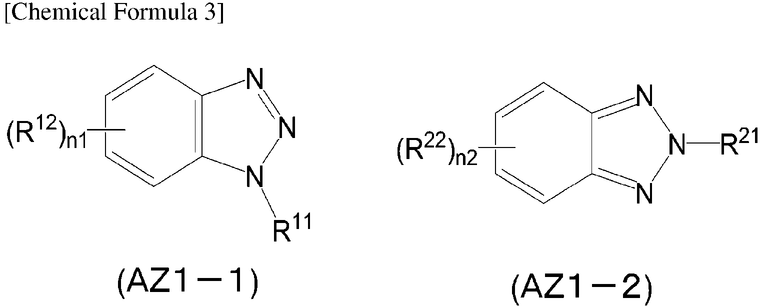 [In the formulae, R¹¹ represents an organic group or a hydrogen atom. R¹² represents a substituent. n1 represents an integer in a range of 0 to 4. R²¹ represents an organic group or a hydrogen atom. R²² represents a substituent. n2 represents an integer in a range of 0 to 4.]
[11] The flux according to any one of [1] to [10], in which a content of the compound having a benzotriazole skeleton is 1% by mass or more and 10% by mass or less with respect to a total mass of the flux.
[12] The flux according to any one of [1] to [11], in which a mixing ratio of the dicarboxylic acid and the compound having a benzotriazole skeleton is 0.2 or more and 3 or less as a mass ratio represented by the dicarboxylic acid/the compound having a benzotriazole skeleton.
[13] The flux according to any one of [1] to [12], in which a content of the rosin is 10% by mass or more and 40% by mass or less with respect to a total mass of the flux.
[14] The flux according to any one of [1] to [13], in which the rosin includes at least one selected from the group consisting of an acrylic acid-modified hydrogenated rosin, a hydrogenated rosin, and a polymerized rosin.
[15] The flux according to any one of [1] to [14], in which the thixotropic agent contains polyamide.
[16] The flux according to any one of [1] to [15], in which a content of the thixotropic agent is 2% by mass or more and 15% by mass or less with respect to a total mass of the flux.
[17] The flux according to any one of [1] to [16], further containing a phenyl group-substituted imidazole.
[18] The flux according to any one of [1] to [17], in which the flux does not contain a halogen compound.
[19] A solder paste containing a solder alloy powder and the flux according to any one of [1] to [18].
[20] The solder paste according to [19], in which the solder alloy powder consists of a solder alloy containing Sn and Bi.

### Advantageous Effects of Invention

According to the present invention, it is possible to provide a flux in which cohesiveness of a solder alloy powder is high during reflow, blackening of flux residue is suppressed, precipitation with time is unlikely to occur, and temporal stability is good, and a solder paste using the flux.

### BRIEF DESCRIPTION OF DRAWINGS

[FIG. 1] A diagram showing a reflow profile in an evaluation of the present example.
[FIG. 2] A schematic diagram illustrating a method for evaluating wettability in the present example.
[FIG. 3] A diagram showing a state of blackening of flux residue in [Evaluation of suppression of blackening of flux residue] in the present example.
[FIG. 4] A diagram showing a state in which, after being stored for a predetermined period, a flux floats (separates) on a surface of a solder paste in [Evaluation of temporal stability (flux separation with time)] of the present example.

### DESCRIPTION OF EMBODIMENTS

### (Flux)

An embodiment of the flux contains rosin, a polymer (P) having a repeating unit represented by General Formula (p1) described later, a solvent, a thixotropic agent, a dicarboxylic acid, a compound having a benzotriazole skeleton, and optionally, other components.

The flux according to the present embodiment is characterized in that, as a means for suppressing precipitation with time, that is, precipitation of the compound having a benzotriazole skeleton, a polymer (P) having a repeating unit represented by General Formula (p1) is adopted.

### <Rosin>

The flux according to the present embodiment contains rosin.

In the present invention, the term "rosin" includes natural resins containing a mixture of abietic acid and its isomer with abietic acid as a main component, and resins (may be referred to as rosin derivatives) which are obtained by chemically modifying natural resins.

The content of abietic acid in the natural resin is, for example, 40% by mass or more and 80% by mass or less with respect to the natural resin.

In the present specification, the term "main component" denotes a component contained in a compound by an amount of 40% by mass or greater in the components constituting the compound.

Examples of representative isomers of abietic acid include neoabietic acid, palustric acid, and levopimaric acid.

Examples of the "natural resin" include a gum rosin, a wood rosin, and a tall oil rosin.

In the present invention, the "substance obtained by chemical modification of a natural resin (rosin derivative)" includes a substance obtained by subjecting the "natural resin" to one or more treatments selected from the group consisting of hydrogenation, dehydrogenation, neutralization, alkylene oxide addition, amidation, dimerization, multimerization, esterification, and Diels-Alder cycloaddition.

Examples of the rosin derivatives include a purified rosin and a modified rosin.

Examples of the modified rosin include a hydrogenated rosin, a polymerized rosin, a polymerized hydrogenated rosin, a disproportionated rosin, an acid-modified rosin, a rosin ester, an acid-modified hydrogenated rosin, an acid anhydride-modified hydrogenated rosin, an acid-modified disproportionated rosin, an acid anhydride-modified disproportionated rosin, a phenol-modified rosin, an α,β unsaturated carboxylic acid-modified product (such as an acrylated rosin, a maleated rosin, and a fumarated rosin), purified products, hydrides, and disproportionated products of the polymerized rosin, purified products, hydrides, and disproportionated products of the α,β unsaturated carboxylic acid-modified product, a rosin alcohol, rosin amine, a hydrogenated rosin alcohol, a rosin ester, a hydrogenated rosin ester, a rosin soap, a hydrogenated rosin soap, and an acid-modified rosin soap.

Examples of the rosin amine include a dehydroabietylamine and a dihydroabietylamine. The rosin amine means a so-called disproportionated rosin amine.

In the flux according to the present embodiment, the rosin may be used alone or in combination of two or more thereof.

The rosin preferably includes a rosin derivative, more preferably one or more selected from the group consisting of an acid-modified rosin, a hydrogenated rosin, a polymerized rosin, an acid-modified hydrogenated rosin, and a rosin ester, still more preferably one or more selected from the group consisting of an acid-modified hydrogenated rosin, a hydrogenated rosin, and a polymerized rosin, and particularly preferably at least an acid-modified hydrogenated rosin.

As the acid-modified hydrogenated rosin, an acrylic acid-modified hydrogenated rosin is preferable.

The rosin used in the flux of the present embodiment may be an acid-modified hydrogenated rosin alone, a combination of an acid-modified hydrogenated rosin and a hydrogenated rosin, a combination of a hydrogenated rosin and a polymerized rosin, or a polymerized rosin alone.

The content of the rosin in the flux according to the present embodiment is preferably 10% by mass or more, more preferably 10% by mass or more and 40% by mass or less, still more preferably 15% by mass or more and 40% by mass or less, particularly preferably 20% by mass or more and 35% by mass or less, and most preferably 20% by mass or more and 30% by mass or less with respect to the total mass (100% by mass) of the flux.

In a case where the content of the rosin is equal to or more than the lower limit value of the above-described preferred range, wettability of the solder paste on a land is further improved, and in a case where the content of the rosin is equal to or less than the upper limit value of the above-described preferred range, it is easy to achieve reduction of the flux residue.

### < Polymer (P) having repeating unit represented by General Formula (p1) >

The flux according to the present embodiment contains a polymer (P) (hereinafter, also referred to as a "(P) component") having a repeating unit represented by General Formula (p1) (hereinafter, also referred to as a "repeating unit (p1)"). By containing the (P) component, precipitation of the compound having a benzotriazole skeleton in the flux is suppressed, and in the flux, precipitation with time is unlikely to occur, and temporal stability is improved. 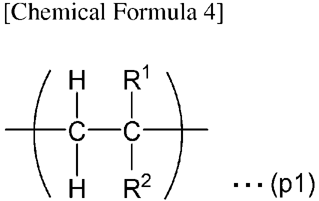 [In the formula, R¹ represents a methyl group or a hydrogen atom. R² represents a hydrocarbon group having 1 or 2 carbon atoms or a hydrogen atom.]

### <<Repeating unit (p1)>>

In Formula (p1), R¹ is preferably a methyl group.

The hydrocarbon group having 2 carbon atoms in R² may be a saturated hydrocarbon group (ethyl group) or an unsaturated hydrocarbon group (ethenyl group or ethynyl group). R² is preferably a hydrocarbon group having 1 or 2 carbon atoms, and more preferably a methyl group.

Specific examples of the repeating unit (p1) are shown below.

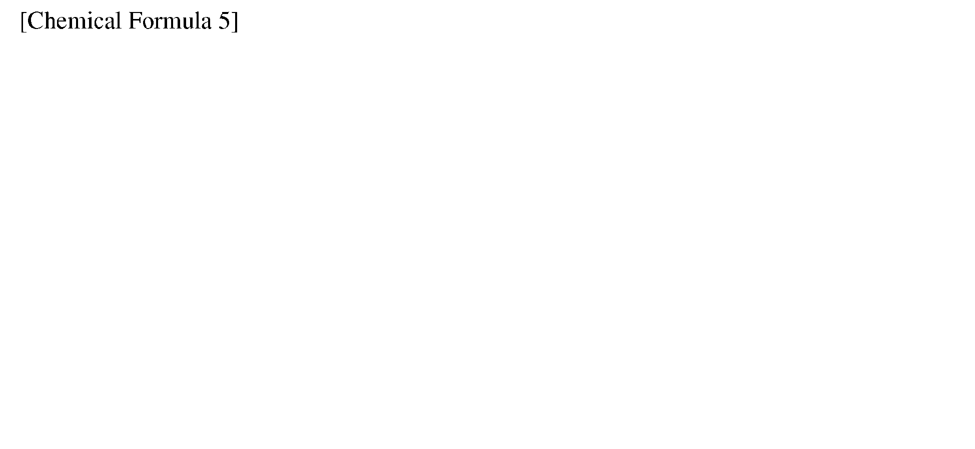

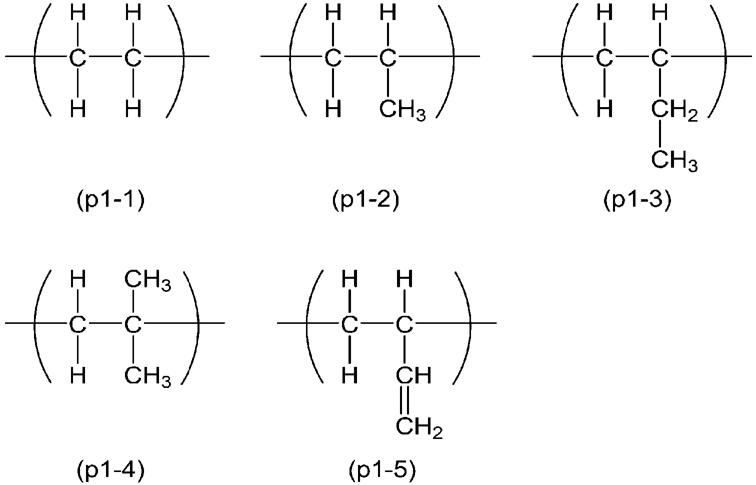

The repeating unit (p1) contained in the (P) component may be used alone or in combination of two or more thereof.

The repeating unit (p1) preferably includes at least one selected from the group consisting of repeating units represented by any of Chemical Formula (p1-1), Chemical Formula (p1-2), Chemical Formula (p1-3), Chemical Formula (p1-4), and Chemical Formula (p1-5), more preferably includes at least one selected from the group consisting of repeating units represented by any of Chemical Formula (p1-3), Chemical Formula (p1-4), and Chemical Formula (p1-5), and still more preferably includes at least one selected from the group consisting of repeating units represented by any of Chemical Formula (p1-3) and Chemical Formula (p1-4).

A proportion of the repeating unit (p1) may be 10% by mole or more, 20% by mole or more, more than 50% by mole, or 100% by mole (that is, a homopolymer) with respect to the total of all repeating units constituting the (P) component (100% by mole).

### <<Repeating unit (p2)>>

The (P) component may be a polymer having the repeating unit (p1) and other repeating units (hereinafter, also referred to as a "repeating unit (p2)").

Examples of the repeating unit (p2) include a repeating unit derived from an alkene and a repeating unit derived from butadiene.

Specific examples of the repeating unit (p2) are shown below.

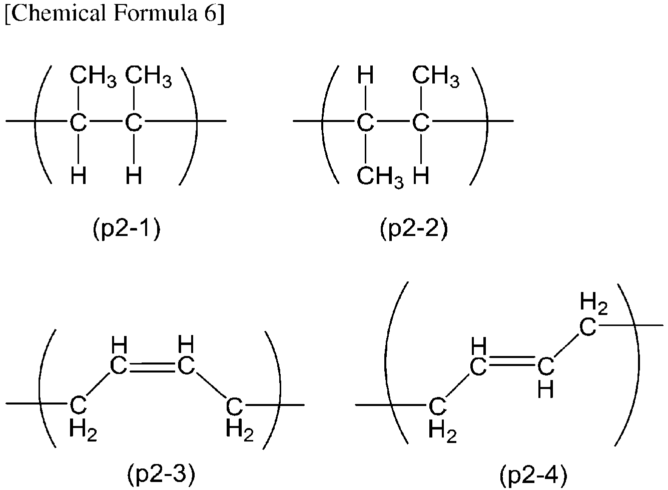

The repeating unit (p2) contained in the (P) component may be used alone or in combination of two or more thereof.

A proportion of the repeating unit (p2) may be 50% by mole or more, 70% to 90% by mole, or 75% to 85% by mole with respect to the total of all repeating units constituting the (P) component (100% by mole).

In the flux of according to the present embodiment, the (P) component may be used alone or in combination of two or more thereof.

The (P) component used in the present embodiment is a polymer having at least the repeating unit (p1), and is preferably a polymer having the repeating unit (p1) as a main component, more preferably a polymer in which a proportion of the repeating unit (p1) with respect to the total of all repeating units constituting the (P) component (100% by mole) is more than 50% by mole, and may be a homopolymer consisting of the repeating unit (p1).

Preferred examples of the (P) component include a homopolymer consisting of the repeating unit represented by Chemical Formula (p1-3), a homopolymer consisting of the repeating unit represented by Chemical Formula (p1-4), a homopolymer consisting of the repeating unit represented by Chemical Formula (p1-5), a copolymer having the repeating unit represented by Chemical Formula (p1-3) and the repeating unit represented by Chemical Formula (p1-4), and a copolymer having the repeating unit represented by Chemical Formula (p1-5) and the repeating unit represented by Chemical Formula (p2-4).

Among these, one or more selected from the group consisting of a copolymer having the repeating unit represented by Chemical Formula (p1-3) and the repeating unit represented by Chemical Formula (p1-4), and a polymer having the repeating unit represented by Chemical Formula (p1-5) is more preferable, and a copolymer having the repeating unit represented by Chemical Formula (p1-3) and the repeating unit represented by Chemical Formula (p1-4) (hereinafter, also referred to as a "copolymer (P34)") is still more preferable.

The copolymer (P34) is preferably a copolymer having the repeating unit represented by Chemical Formula (p1-4) as a main component, and more preferably a copolymer in which a proportion of the repeating unit represented by Chemical Formula (p1-4) with respect to the total of all repeating units constituting the copolymer (P34) (100% by mole) is more than 50% by mole.

The (P) component used in the present embodiment may be synthesized or may be a commercially available product.

Examples of the commercially available product include Nisseki polybutene (manufactured by ENEOS Corporation), Indopol polybutene (manufactured by INEOS Oligomers), NOF polybutene (registered trademark) (manufactured by NOF Corporation), liquid polybutadiene NISSO-PB (manufactured by Nippon Soda Co., Ltd.), and a polybutadiene type liquid polymer Poly bd^{™} (Poly BD) (manufactured by Idemitsu Kosan Co., Ltd.).

A weight-average molecular weight (Mw) (in terms of polystyrene equivalent as determined by gel permeation chromatography (GPC)) of the (P) component is preferably 200 to 10,000, more preferably 250 to 9,000, and still more preferably 300 to 8,000.

A number-average molecular weight (Mn) (in terms of polystyrene equivalent as determined by GPC) of the (P) component is preferably 200 to 7,000, more preferably 250 to 6,000, and still more preferably 300 to 5,000.

In a case where the Mw and Mn of the (P) component are in the above-described preferred ranges, the precipitation of the compound having a benzotriazole skeleton in the flux is likely to be suppressed, and temporal stability (difficulty in occurrence of precipitation with time) is improved.

The content of the (P) component in the flux according to the present embodiment is preferably 1% by mass or more and 15% by mass or less, more preferably 2% by mass or more and 10% by mass or less, and still more preferably 3% by mass or more and 10% by mass or less with respect to the total mass (100% by mass) of the flux.

In a case where the content of the (P) component is equal to or more than the lower limit value of the above-described preferred range, the precipitation of the compound having a benzotriazole skeleton in the flux is likely to be suppressed, and temporal stability (difficulty in occurrence of precipitation with time) is improved, and in a case where the content of the (P) component is equal to or less than the upper limit value of the above-described preferred range, temporal stability (suppression of flux separation with time) is likely to be improved.

### <Solvent>

The flux according to the present embodiment contains a solvent.

As the solvent, for example, water, an alcohol-based solvent, a glycol ether-based solvent, and terpineols are exemplary examples.

Examples of the alcohol solvents include isopropyl alcohol, 1,2-butanediol, 1,3-butanediol, isobornyl cyclohexanol, 2,4-diethyl-1,5-pentanediol, 2,2-dimethyl-1,3-propanediol, 2,5-dimethyl-2,5-hexanediol, 2,5-dimethyl-3-hexyne-2,5-diol, 2,3-dimethyl-2,3-butanediol, 2-methylpentane-2,4-diol, 1,1,1-tris(hydroxymethyl)propane, 2-ethyl-2-hydroxymethyl-1,3-propanediol, 2,2'-oxybis(methylene)bis(2-ethyl-1,3-propanediol), 2,2-bis(hydroxymethyl)-1,3-propanediol, 1,2,6-trihydroxyhexane, 1-ethynyl-1-cyclohexanol, 1,4-cyclohexanediol, 1,4-cyclohexanedimethanol, 2,4,7,9-tetramethyl-5-decyne-4,7-diol, 2-hexyl-1-decanol, and octanediol.

Examples of the glycol ether solvents include diethylene glycol mono-2-ethylhexyl ether, ethylene glycol monophenyl ether, diethylene glycol monohexyl ether (hexyl diglycol: HeDG), diethylene glycol dibutyl ether, triethylene glycol monobutyl ether, triethylene glycol butyl methyl ether, tetraethylene glycol, tetraethylene glycol dimethyl ether, propylene glycol monoalkyl ether, and the like.

Examples of the terpineols include α-terpineol, β-terpineol, γ-terpineol, and terpineol mixtures (that is, mixtures containing β-terpineol or γ-terpineol with α-terpineol as a main component).

Examples of other solvents include dioctyl sebacate and liquid paraffin.

In the flux according to the present embodiment, the solvent may be used alone or in combination of two or more thereof.

Among the above, the solvent is preferably a glycol ether-based solvent, and more preferably propylene glycol monoalkyl ether in particular because it is likely to suppress an increase in viscosity of the solder paste.

The propylene glycol monoalkyl ether preferably includes one or more selected from the group consisting of tripropylene glycol butyl ether, dipropylene glycol butyl ether, and propylene glycol monobutyl ether, and more preferably includes one or more selected from the group consisting of tripropylene glycol butyl ether and dipropylene glycol butyl ether.

A content of the solvent in the flux according to the present embodiment is the remainder in the flux, and is determined according to the contents of the other components.

For example, the content of the solvent in the flux according to the present embodiment may be 30% by mass or more and 70% by mass or less, 35% by mass or more and 60% by mass or less, 35% by mass or more and 55% by mass or less, or 40% by mass or more and 50% by mass or less with respect to the total mass (100% by mass) of the flux.

In the flux according to the present embodiment, in a case where the propylene glycol monoalkyl ether is selected as the solvent, a content of the propylene glycol monoalkyl ether in the flux is preferably 5% to 50% by mass, more preferably 10% to 40% by mass, and still more preferably 15% to 35% by mass with respect to the total mass (100% by mass) of the flux.

In a case where the content of the propylene glycol monoalkyl ether is equal to or more than the lower limit value of the above-described preferred range, an increase in viscosity of the solder paste is likely to be suppressed, and in a case where the content of the propylene glycol monoalkyl ether is equal to or less than the upper limit value of the above-described preferred range, the precipitation of the compound having a benzotriazole skeleton in the flux is likely to be suppressed, and temporal stability (difficulty in occurrence of precipitation with time) is improved.

In the flux according to the present embodiment, from the viewpoint of temporal stability (difficulty in occurrence of precipitation with time), a mixing ratio of the polymer (P) and the propylene glycol monoalkyl ether is preferably 0.05 or more and more preferably 0.10 or more and 3 or less as a mass ratio represented by polymer (P)/propylene glycol monoalkyl ether.

In a case where such a mass ratio is within the above-described preferred range, the precipitation of the compound having a benzotriazole skeleton in the flux is likely to be suppressed, and temporal stability (difficulty in occurrence of precipitation with time) is improved.

In the flux according to the present embodiment, from the viewpoint of achieving both suppression of an increase in viscosity of the solder paste and temporal stability (difficulty in occurrence of precipitation with time), a mixing ratio of the polymer (P) and the propylene glycol monoalkyl ether is preferably 0.05 or more, more preferably 0.05 or more and 1.5 or less, still more preferably 0.06 or more and 1.0 or less, and particularly preferably 0.10 or more and 0.50 or less as a mass ratio represented by polymer (P)/propylene glycol monoalkyl ether.

In a case where such a mass ratio is equal to or more than the lower limit value of the above-described preferred range, the precipitation of the compound having a benzotriazole skeleton in the flux is likely to be suppressed, and temporal stability (difficulty in occurrence of precipitation with time) is improved, and in a case where the mass ratio is equal to or less than the upper limit value of the above-described preferred range, an increase in viscosity of the solder paste is likely to be suppressed.

### <Thixotropic agent>

The flux according to the present embodiment contains a thixotropic agent.

Examples of the thixotropic agent include an amide-based thixotropic agent, an ester-based thixotropic agent, a sorbitol-based thixotropic agent, and the like.

Examples of the amide-based thixotropic agent include monoamides, bisamides, and polyamides.

Examples of the monoamides include lauric acid amide, palmitic acid amide, stearic acid amide, behenic acid amide, hydroxystearic acid amide, saturated fatty acid amide, oleic acid amide, erucic acid amide, unsaturated fatty acid amide, 4-methylbenzamide (p-toluamide), p-toluenemethanamide, aromatic amide, hexamethylene hydroxystearic amide, substituted amide, methylolstearic amide, methylolamide, and fatty acid ester amide.

Examples of the bisamides include ethylenebis fatty acid (fatty acid having 6 to 24 carbon atom) amide, ethylenebis hydroxy fatty acid (fatty acid having 6 to 24 carbon atom) amide, hexamethylenebis fatty acid (fatty acid having 6 to 24 carbon atom) amide, hexamethylenebis hydroxy fatty acid (fatty acid having 6 to 24 carbon atom) amide, and aromatic bisamide. Examples of fatty acids that are raw materials for the bisamides include stearic acid (having 18 carbon atoms), oleic acid (having 18 carbon atoms), and lauric acid (having 12 carbon atoms).

Examples of the polyamides include saturated fatty acid polyamide, unsaturated fatty acid polyamide, aromatic polyamide, 1,2,3-propanetricarboxylic acid tris(2-methylcyclohexylamide), cyclic amide oligomers, and acyclic amide oligomers.

Examples of the above-mentioned cyclic amide oligomers include an amide oligomer in which a dicarboxylic acid and a diamine are cyclically polycondensed, an amide oligomer in which a tricarboxylic acid and a diamine are cyclically polycondensed, an amide oligomer in which a dicarboxylic acid and a triamine are cyclically polycondensed, an amide oligomer in which a tricarboxylic acid and a triamine are cyclically polycondensed, an amide oligomer in which a dicarboxylic acid and a tricarboxylic acid, and a diamine are cyclically polycondensed, an amide oligomer in which a dicarboxylic acid and a tricarboxylic acid, and a triamine are cyclically polycondensed, an amide oligomer in which a dicarboxylic acid, and a diamine and a triamine are cyclically polycondensed, an amide oligomer in which a tricarboxylic acid, and a diamine and a triamine are cyclically polycondensed, and an amide oligomer in which a dicarboxylic acid and a tricarboxylic acid, and a diamine and a triamine are cyclically polycondensed.

In addition, examples of the above-described acyclic amide oligomers include an amide oligomer in which a monocarboxylic acid, and a diamine and/or a triamine are acyclically polycondensed and an amide oligomer in which a dicarboxylic acid and/or a tricarboxylic acid, and a monoamine are acyclically polycondensed. In the case of an amide oligomer containing a monocarboxylic acid or a monoamine, the monocarboxylic acid and the monoamine function as terminal molecules, thereby resulting in an acyclic amide oligomer having a reduced molecular weight. In addition, when the acyclic amide oligomer is an amide compound in which a dicarboxylic acid and/or a tricarboxylic acid, and a diamine and/or a triamine are acyclically polycondensed, it is an acyclic polymer-based amide polymer. Furthermore, the acyclic amide oligomer also includes an amide oligomer in which a monocarboxylic acid and a monoamine are acyclically condensed.

Examples of the ester-based thixotropic agent include an ester compound, and specific examples thereof include hydrogenated castor oil and ethyl myristate.

As the sorbitol-based thixotropic agent, for example, dibenzylidene-D-sorbitol, bis(4-methylbenzylidene)-D-sorbitol, (D-)sorbitol, monobenzylidene(-D-)sorbitol, and mono(4-methylbenzylidene)-(D-)sorbitol, and the like are exemplary examples.

In the flux according to the present embodiment, the thixotropic agent may be used alone or in combination of two or more thereof.

Among the above, the thixotropic agent preferably includes one or more selected from the group consisting of amide-based thixotropic agents and ester-based thixotropic agents, and more preferably includes one or more selected from the amide-based thixotropic agents.

Among the amide-based thixotropic agents, it is still more preferable to include a polyamide in particular because it is likely to improve temporal stability (suppression of flux separation with time). The selection of the polyamide is particularly effective in a case where the content of the (P) component is high (for example, in a case where the content is 10% by mass or more with respect to the total mass (100% by mass) of the flux).

The content of the thixotropic agent in the flux according to the present embodiment is preferably 2% by mass or more and 15% by mass or less, more preferably 4% by mass or more and 12% by mass or less, and still more preferably 5% by mass or more and 9% by mass or less with respect to the total mass (100% by mass) of the flux.

In a case where the content of the thixotropic agent is equal to or more than the lower limit value of the above-described preferred range, temporal stability (suppression of flux separation with time) is likely to be improved, and in a case where the content of the thixotropic agent is equal to or less than the upper limit value of the above-described preferred range, excessive increase in an initial viscosity of the solder paste is easily suppressed.

### <Dicarboxylic acid>

The flux according to the present embodiment contains a dicarboxylic acid. By selecting the dicarboxylic acid among the organic acids, during reflow in reflow soldering, in a case where the solder alloy powder is melted, cohesiveness of the solder alloy powder is improved (occurrence of solder balls is suppressed).

Examples of the dicarboxylic acid include a dibasic carboxylic acid, which may be an aliphatic dicarboxylic acid or an aromatic dicarboxylic acid.

Preferred examples of the dicarboxylic acid include a compound represented by General Formula (c1). 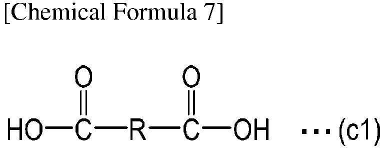 [In the formula, R represents an alkylene group having 1 to 10 carbon atoms, a phenylene group, or a single bond, provided that a methylene group constituting the alkylene group may be substituted with an oxygen atom.]

In Formula (c1), the number of carbon atoms in the alkylene group in R is preferably 2 to 8. The alkylene group in R may be linear or branched, and is preferably linear.

Examples of the dicarboxylic acid include succinic acid, glutaric acid, diglycolic acid, adipic acid, sebacic acid, dodecanedioic acid, o-phthalic acid, m-phthalic acid (isophthalic acid), and p-phthalic acid (terephthalic acid).

In the flux according to the present embodiment, the dicarboxylic acid may be used alone or in combination of two or more thereof.

Among the above, the dicarboxylic acid is preferably an aliphatic dicarboxylic acid, more preferably a dicarboxylic acid in which R in Formula (c1) is an alkylene group having 2 to 8 carbon atoms, and among these, still more preferably glutaric acid or adipic acid, and particularly preferably adipic acid.

The content of the dicarboxylic acid in the flux according to the present embodiment is preferably 0.5% by mass or more and 7.5% by mass or less, more preferably 1% by mass or more and 6% by mass or less, and still more preferably 2% by mass or more and 4% by mass or less with respect to the total mass (100% by mass) of the flux.

In a case where the content of the dicarboxylic acid is equal to or more than the lower limit value of the above-described preferred range, cohesiveness of the solder alloy powder is likely to be improved during reflow, and in a case where the content of the dicarboxylic acid is equal to or less than the upper limit value of the above-described preferred range, an increase in viscosity of the solder paste is likely to be suppressed.

### <Compound having benzotriazole skeleton>

The flux according to the present embodiment contains a compound having a benzotriazole skeleton (hereinafter, also referred to as an "(AZ1) component"). By containing the (AZ1) component, blackening of the flux residue can be suppressed.

In the present specification, the "compound having a benzotriazole skeleton" means a compound in which a heterocyclic 5-membered ring having three nitrogen atoms forms a fused ring together with a benzene ring.

Examples of the (AZ1) component include a compound represented by General Formula (AZ1-1) or a compound represented by General Formula (AZ1-2). 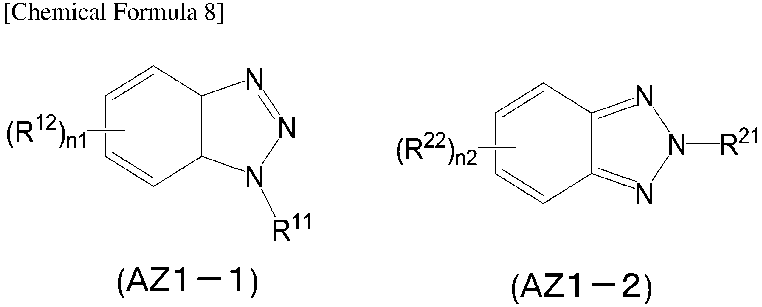 [In the formulae, R¹¹ represents an organic group or a hydrogen atom. R¹² represents a substituent. n1 represents an integer in a range of 0 to 4. R²¹ represents an organic group or a hydrogen atom. R²² represents a substituent. n2 represents an integer in a range of 0 to 4.]

### · Regarding compound represented by General Formula (AZ1-1)

R¹¹ represents an organic group or a hydrogen atom, and preferably represents a hydrogen atom.

In a case where R¹¹ represents an organic group, examples of the organic group include a chain hydrocarbon group having 1 to 40 carbon atoms, which may have a substituent, an alicyclic hydrocarbon group having 3 to 40 carbon atoms, which may have a substituent, and -R¹⁰¹-N(R^{102a})(R^{102b}).

Examples of the substituent include a carboxy group, a carbonyl group, a hydroxy group, an amino group, and a halogen atom.

In a case where R¹¹ is a chain hydrocarbon group, the chain hydrocarbon group may be linear or branched, but it is preferably branched. The chain hydrocarbon group is a saturated hydrocarbon group or an unsaturated hydrocarbon group, but is preferably a saturated hydrocarbon group.

When R¹¹ is an alicyclic hydrocarbon group, the alicyclic hydrocarbon group may be a polycyclic group or a monocyclic group. The monocyclic alicyclic hydrocarbon group is preferably a group obtained by removing one or more hydrogen atoms from a monocycloalkane. The polycyclic alicyclic hydrocarbon group is preferably a group obtained by removing one or more hydrogen atoms from a polycycloalkane.

In a case where R¹¹ represents -R¹⁰¹-N(R^{102a})(R^{102b}), R¹⁰¹ may represent, for example, a hydrocarbon group having 1 to 5 carbon atoms. Examples of the hydrocarbon group as R¹⁰¹ include a linear or branched aliphatic hydrocarbon group, and the number of carbon atoms is preferably 1 to 10, more preferably 1 to 6, still more preferably 1 to 4, and most preferably 1 to 3.

As the linear aliphatic hydrocarbon group as R¹⁰¹, a linear alkylene group is preferable. Specific examples thereof include a methylene group [-CH₂-], an ethylene group [-(CH₂)₂-], a trimethylene group [-(CH₂)₃-], a tetramethylene group [-(CH₂)₄-], and a pentamethylene group [-(CH₂)₅-].

As the branched aliphatic hydrocarbon group as R¹⁰¹, a branched alkylene group is preferable, and specific examples thereof include alkylalkylene groups, for example, alkylmethylene groups such as -CH(CH₃)-, -CH(CH₂CH₃)-, -C(CH₃)₂-, - C(CH₃)(CH₂CH₃)-, -C(CH₃)(CH₂CH₂CH₃)-, and -C(CH₂CH₃)₂-; alkylethylene groups such as -CH(CH₃)CH₂-, -CH(CH₃)CH(CH₃)-, -C(CH₃)₂CH₂-, -CH(CH₂CH₃)CH₂-, and - C(CH₂CH₃)₂-CH₂-; alkyltrimethylene groups such as -CH(CH₃)CH₂CH₂- and - CH₂CH(CH₃)CH₂-; and alkyltetramethylene groups such as -CH(CH₃)CH₂CH₂CH₂-, - CH₂CH(CH₃)CH₂CH₂-.

R^{102a} and R^{102b} each independently may be, for example, a chain hydrocarbon group having 1 to 20 carbon atoms, which may have a substituent, or a hydrogen atom. Examples of the substituent include the above-described substituents.

In a case where R^{102a} and R^{102b} represent a chain hydrocarbon group, the chain hydrocarbon group may be linear or branched. The chain hydrocarbon group is a saturated hydrocarbon group or an unsaturated hydrocarbon group, but is preferably a saturated hydrocarbon group.

Examples of R¹² in General Formula (AZ1-1) include a hydrocarbon group having 1 to 5 carbon atoms, a carboxy group, a hydroxy group, an amino group, a halogen atom, and the like.

In a case where R¹² is a hydrocarbon group having 1 to 5 carbon atoms, the hydrocarbon group may be linear or branched. In addition, the hydrocarbon group may be a saturated hydrocarbon group or an unsaturated hydrocarbon group, and is preferably a saturated hydrocarbon group.

Examples of the hydrocarbon group as R¹² include a methyl group, an ethyl group, an n-propyl group, an isopropyl group, an n-butyl group, an isobutyl group, a sec-butyl group, a tert-butyl group, an n-pentyl group, an isopentyl group, a sec-pentyl group, a tert-pentyl group, and a neopentyl group, and a methyl group is preferable.

Examples of the halogen atom as R¹² include a fluorine atom, a chlorine atom, a bromine atom, and an iodine atom.

In a case where n1 is 2 or more, a plurality of R¹²'s may be the same as or different from each other. n1 represents preferably 0 or 1.

Examples of the compound represented by General Formula (AZ1-1) include 1,2,3-benzotriazole, 5-methylbenzotriazole, 1-[N,N-bis(2-ethylhexyl)aminomethyl]benzotriazole, carboxybenzotriazole, 1-[N,N-bis(2-ethylhexyl)aminomethyl]methylbenzotriazole, and the like, and among these, one or more selected from the group consisting of 1,2,3-benzotriazole and 5-methylbenzotriazole is preferable, and 1,2,3-benzotriazole is more preferable.

### · Regarding compound represented by General Formula (AZ1-2)

R²¹ represents an organic group or a hydrogen atom. In a case where R²¹ represents an organic group, examples of the organic group include an aromatic hydrocarbon group which may have a substituent, a chain hydrocarbon group having 1 to 40 carbon atoms, which may have a substituent, and an alicyclic hydrocarbon group having 3 to 40 carbon atoms, which may have a substituent, and an aromatic hydrocarbon group is preferable.

The description of the chain hydrocarbon group and the alicyclic hydrocarbon group as R²¹ is the same as the description of the chain hydrocarbon group and the alicyclic hydrocarbon group as R¹¹ described above.

The aromatic hydrocarbon group is a hydrocarbon group having at least one aromatic ring, and examples thereof include an aromatic hydrocarbon ring such as benzene, naphthalene, anthracene, and phenanthrene; an aromatic heterocyclic ring in which some of the carbon atoms constituting an aromatic hydrocarbon ring are substituted with heteroatoms; and a fused ring in which an aromatic hydrocarbon ring and an aromatic heterocyclic ring are fused.

In a case where the aromatic hydrocarbon group as R²¹ has a substituent, examples of the substituent include a hydrocarbon group having 1 to 20 carbon atoms, an aromatic hydrocarbon group, a carboxy group, a hydroxy group, an amino group, and a halogen atom, among which a hydrocarbon group or a hydroxy group is preferable. In a case where the substituent is a hydrocarbon group, examples of the hydrocarbon group include the same groups as those for the hydrocarbon group as R¹¹. In a case where the substituent is an aromatic hydrocarbon group, examples of the aromatic hydrocarbon group include those described above.

Examples of R²² in General Formula (AZ1-2) include the same one as R¹² in General Formula (AZ1-1).

The compound represented by General Formula (AZ1-2) may have a plurality of benzotriazole skeletons. Here, the plurality is, for example, 2 to 5, and is preferably 2.

Examples of the compound represented by General Formula (AZ1-2) include 2-(2'-hydroxy-5'-methylphenyl)benzotriazole, 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-5'-tert-octylphenyl)benzotriazole, 2,2'-methylenebis[6-(2H-benzotriazol-2-yl)-4-tert-octylphenol], and 6-(2-benzotriazolyl)-4-tert-octyl-6'-tert-butyl-4'-methyl-2,2'-methylenebisphenol, and among these, 2-(2'-hydroxy-5'-methylphenyl)benzotriazole is preferable.

In the flux according to the present embodiment, the (AZ1) component may be used alone or in combination of two or more kinds thereof.

Among the above, the (AZ1) component is preferably one or more selected from the group consisting of 1,2,3-benzotriazole, 5-methylbenzotriazole, and 2-(2'-hydroxy-5'-methylphenyl)benzotriazole, and more preferably includes at least 1,2,3-benzotriazole.

The (AZ1) component used in the flux according to the present embodiment may be 1,2,3-benzotriazole alone, 5-methylbenzotriazole alone, 2-(2'-hydroxy-5'-methylphenyl)benzotriazole alone, a combination of 1,2,3-benzotriazole and 5-methylbenzotriazole, or a combination of 1,2,3-benzotriazole and 2-(2'-hydroxy-5'-methylphenyl)benzotriazole. Among these, it is still more preferable to use 1,2,3-benzotriazole alone, a combination of 1,2,3-benzotriazole and 5-methylbenzotriazole, or a combination of 1,2,3-benzotriazole and 2-(2'-hydroxy-5'-methylphenyl)benzotriazole.

The content of the compound having a benzotriazole skeleton in the flux according to the present embodiment is preferably 1% by mass or more and 10% by mass or less, more preferably 1% by mass or more and 6% by mass or less, and still more preferably 3% by mass or more and 5% by mass or less with respect to the total mass (100% by mass) of the flux.

In a case where the content of the compound having a benzotriazole skeleton is equal to or more than the lower limit value of the above-described preferred range, blackening of the flux residue is likely to be suppressed, and in a case where the content of the compound having a benzotriazole skeleton is equal to or less than the upper limit value of the above-described preferred range, wettability of the solder paste on a land is further improved.

In the flux according to the present embodiment, in a case where a content of the rosin is preferably 15% by mass or more and more preferably 20% by mass or more, and a content of the compound having a benzotriazole skeleton is preferably 6% by mass or less and more preferably 5% by mass or less, with respect to the total mass (100% by mass) of the flux, wettability of the solder paste on a land is likely to be further improved.

In the flux according to the present embodiment, a mixing ratio of the dicarboxylic acid and the compound having a benzotriazole skeleton is preferably 0.2 or more and 3 or less, more preferably 0.4 or more and 2 or less, still more preferably 0.5 or more and 1.5 or less, and particularly preferably more than 0.5 and less than 1.5 as a mass ratio represented by dicarboxylic acid/compound having a benzotriazole skeleton.

In a case where such a mass ratio is equal to or more than the lower limit value of the above-described preferred range, cohesiveness of the solder alloy powder is likely to be improved during reflow, and in a case where the mass ratio is equal to or less than the upper limit value of the above-described preferred range, blackening of the flux residue is likely to be suppressed.

### <Other components>

The flux according to the present embodiment may contain other components as necessary in addition to the rosin, the polymer (P), the solvent, the thixotropic agent, the dicarboxylic acid, and the compound having a benzotriazole skeleton described above.

As the other components, an activator, a resin component other than the rosin, a metal deactivator, a surfactant, a silane coupling agent, an antioxidant, and a colorant are exemplary examples.

### <<Activator>>

Examples of the activator include amines, organic acids other than dicarboxylic acids, and halogen compounds.

### · Regarding amines

As the amine, for example, rosin amines, azoles, guanidines, an alkylamine compound, and an aminoalcohol compound are exemplary examples. Examples of the rosin amines include those described as examples in <Rosin> described above.

Example of the azoles include 2-methylimidazole, 2-ethylimidazole, 2-undecylimidazole, 2-heptadecylimidazole, 1,2-dimethylimidazole, 2-ethyl-4-methylimidazole, 2-phenylimidazole, 2-phenyl-4-methylimidazole, 1-benzyl-2-methylimidazole, 1-benzyl-2-phenylimidazole, 1-cyanoethyl-2-methylimidazole, 1-cyanoethyl-2-undecylimidazole, 1-cyanoethyl-2-ethyl-4-methylimidazole, 1-cyanoethyl-2-phenylimidazole, 1-cyanoethyl-2-undecylimidazolium trimellitate, 1-cyanoethyl-2-phenylimidazolium trimellitate, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, a 2,4-diamino-6-[2'-methylimidazolyl-(1')]-ethyl-s-triazine isocyanuric acid adduct, a 2-phenylimidazole isocyanuric acid adduct, 2-phenyl-4,5-dihydroxymethylimidazole, 2-phenyl-4-methyl-5-hydroxymethylimidazole, 2,3-dihydro-1H-pyrrolo[1,2-a]benzimidazole, 1-dodecyl-2-methyl-3-benzylimidazolium chloride, 2-methylimidazoline, 2-phenylimidazoline, 2,4-diamino-6-vinyl-s-triazine, a 2,4-diamino-6-vinyl-s-triazine isocyanuric acid adduct, 2,4-diamino-6-methacryloyloxyethyl-s-triazine, an epoxy-imidazole adduct, 2-methylbenzimidazole, 2-octylbenzimidazole, 2-pentylbenzimidazole, 2-(1-ethylpentyl)benzimidazole, 2-nonylbenzimidazole, 2-(4-thiazolyl)benzimidazole, benzimidazole, 1,2,4-triazole, 2-(2'-hydroxy-5'-methylphenyl)benzotriazole, 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-5'-tert-octylphenyl)benzotriazole, 2,2'-methylenebis[6-(2H-benzotriazol-2-yl)-4-tert-octylphenol], 6-(2-benzotriazolyl)-4-tert-octyl-6'-tert-butyl-4'-methyl-2,2'-methylenebisphenol, 1,2,3-benzotriazole, 1-[N,N-bis(2-ethylhexyl)aminomethyl]benzotriazole, carboxybenzotriazole, 1-[N,N-bis(2-ethylhexyl)aminomethyl]methylbenzotriazole, 2,2'-[[(methyl-1H-benzotriazol-1-yl)methyl]imino]bisethanol, 1-(1',2'-dicarboxyethyl)benzotriazole, 1-(2,3-dicarboxypropyl)benzotriazole, 1-[(2-ethylhexylamino)methyl]benzotriazole, 2,6-bis[(1H-benzotriazol-1-yl)methyl]-4-methylphenol, 5-methylbenzotriazole, 5-phenyltetrazole, and the like.

Examples of the guanidines include 1,3-diphenylguanidine, 1,3-di-o-tolylguanidine, 1-o-tolylbiguanide, 1,3-di-o-cumenylguanidine, 1,3-di-o-cumenyl-2-propionylguanidine, and the like.

Examples of the alkylamine compounds include ethylamine, triethylamine, ethylenediamine, triethylenetetramine, cyclohexylamine, hexadecylamine, stearylamine, and the like.

As the amino alcohol compound, for example, alkanolamines such as 1-amino-2-propanol, N,N,N',N'-tetrakis(2-hydroxypropyl)ethylenediamine, and monoisopropanolamine are exemplary examples.

In a case of using the amine, the amine may be used alone or in combination of two or more thereof.

Among the above, as the amine, azoles or guanidines are preferably used. Among the azoles, since an increase in viscosity of the solder paste can be particularly suppressed, it is preferable to use a phenyl group-substituted imidazole and particularly preferable to use 2-phenyl-4-methylimidazole. Among the guanidines, 1,3-di-o-tolylguanidine is particularly preferably used.

As the amines used in the flux according to the present embodiment, a combination of azoles and guanidines is preferable is preferably used, and suitable examples thereof include a combination of 2-phenyl-4-methylimidazole and 1,3-di-o-tolylguanidine.

In a case of using the amine other than the compound having a benzotriazole skeleton described above, a content of the amine (excluding the compound having a benzotriazole skeleton described above) in the flux is preferably 4% by mass or more and 15% by mass or less, more preferably 5% by mass or more and 12% by mass or less, and still more preferably 6% by mass or more and 10% by mass or less with respect to the total amount (100% by mass) of the flux.

In a case where the content of the amine is equal to or more than the lower limit value of the above-described preferred range, an increase in viscosity of the solder paste is likely to be suppressed, and in a case where the content of the amine is equal to or less than the upper limit value of the above-described preferred range, cohesiveness of the solder alloy powder is likely to be improved during reflow.

### · Regarding organic acids excluding dicarboxylic acids

Examples of the organic acid excluding a dicarboxylic acid include a carboxylic acid and an organic sulfonic acid. Examples of the carboxylic acid include an aliphatic carboxylic acid and an aromatic carboxylic acid. Examples of the aliphatic carboxylic acid include an aliphatic monocarboxylic acid.

Examples of the aliphatic monocarboxylic acid include caproic acid, enanthic acid, caprylic acid, pelargonic acid, isopelargonic acid, capric acid, caproic acid, lauric acid (dodecanoic acid), undecanoic acid, lindelic acid, tridecanoic acid, myristoleic acid, pentadecanoic acid, isopalmitic acid, palmitoleic acid, hiragonic acid, hydnocarpic acid, margaric acid, isostearic acid, erucic acid, petroselinic acid, moroctic acid, elaeostearic acid, tariric acid, vaccenic acid, limnoleic acid, vernolic acid, sterculic acid, nonadecanoic acid, eicosanoic acid, stearic acid, 12-hydroxystearic acid, oleic acid, linoleic acid, linolenic acid, myristic acid, 2,2-bis(hydroxymethyl)propionic acid, 2,2-bis(hydroxymethyl)butanoic acid, and the like.

Examples of the aromatic carboxylic acid include salicylic acid, p-hydroxyphenylacetic acid, benzoic acid, 2,3-dihydroxybenzoic acid, 2-quinolinecarboxylic acid, 3-hydroxybenzoic acid, p-anisic acid, picolinic acid, and 3-hydroxypicolinic acid.

Examples of the organic sulfonic acid include an aliphatic sulfonic acid and an aromatic sulfonic acid. Examples of the aliphatic sulfonic acid include an alkanesulfonic acid and an alkanolsulfonic acid.

As the alkanesulfonic acid, for example, methanesulfonic acid, ethanesulfonic acid, 1-propanesulfonic acid, 2-propanesulfonic acid, 1-butanesulfonic acid, 2-butanesulfonic acid, pentanesulfonic acid, hexanesulfonic acid, decanesulfonic acid, and dodecanesulfonic acid are exemplary examples.

As the alkanolsulfonic acid, for example, 2-hydroxyethane-1-sulfonic acid, 2-hydroxypropane-1-sulfonic acid, 2-hydroxybutane-1-sulfonic acid, 2-hydroxypentane-1-sulfonic acid, 1-hydroxypropane-2-sulfonic acid, 3-hydroxypropane-1-sulfonic acid, 4-hydroxybutane-1-sulfonic acid, 2-hydroxyhexane-1-sulfonic acid, 2-hydroxydecane-1-sulfonic acid, and 2-hydroxydodecane-1-sulfonic acid are exemplary examples.

As the aromatic sulfonic acid, for example, 1-naphthalenesulfonic acid, 2-naphthalenesulfonic acid, p-toluenesulfonic acid, xylenesulfonic acid, p-phenolsulfonic acid, cresolsulfonic acid, sulfosalicylic acid, nitrobenzenesulfonic acid, sulfoanthranilic acid, and diphenylamine-4-sulfonic acid are exemplary examples.

In a case of using the organic acid other than the dicarboxylic acid, the organic acid may be used alone or in combination of two or more thereof, but in the flux according to the present embodiment, it is preferable not to contain the organic acid other than the dicarboxylic acid from the viewpoint that the effect of the dicarboxylic acid is sufficiently high and the flux residue is reduced.

### · Regarding halogen compound

Examples of the halogen compounds include amine hydrohalide salts, and organic halogen compounds other than amine hydrohalide salts.

The amine hydrohalide salt is a compound obtained by reacting an amine with a hydrogen halide. As the amine herein, aliphatic amines, azoles, and guanidines are exemplary examples. Examples of the hydrogen halide include hydrides of chlorine, bromine, and iodine.

As the aliphatic amines, for example, ethylamine, diethylamine, triethylamine, and ethylenediamine are exemplary examples.

Examples of the guanidines and the azoles include those exemplified in the description of the amines.

Examples of the organic halogen compounds other than the amine hydrohalide salts include halogenated aliphatic compounds. The halogenated aliphatic hydrocarbon group refers to one in which a part or all of hydrogen atoms constituting the aliphatic hydrocarbon group are substituted with halogen atoms.

Examples of the halogenated aliphatic compound include halogenated aliphatic alcohols and halogenated heterocyclic compounds.

In a case of using the halogen compound, the halogen compound may be used alone or in combination of two or more thereof, but in the flux according to the present embodiment, it is preferable not to contain the halogen compound because it is likely to suppress an increase in viscosity of the solder paste.

### <<Resin component other than rosin>>

As the resin component other than the rosin-based resin, for example, a terpene resin, a modified terpene resin, a terpene phenol resin, a modified terpene phenol resin, a styrene resin, a modified styrene resin, a xylene resin, a modified xylene resin, an acrylic resin, a polyethylene resin, an acrylic-polyethylene copolymer resin, and an epoxy resin are exemplary examples.

Examples of the modified terpene resin include an aromatic modified terpene resin, a hydrogenated terpene resin, and a hydrogenated aromatic modified terpene resin. Examples of the modified terpene phenol resin include a hydrogenated terpene phenol resin. Examples of the modified styrene resin include a styrene acrylic resin and a styrene maleic acid resin. Examples of the modified xylene resin include a phenol-modified xylene resin, an alkylphenol-modified xylene resin, a phenol-modified resol-type xylene resin, a polyol-modified xylene resin, and a polyoxyethylene-added xylene resin.

### <<Metal deactivator>>

Examples of the metal deactivators include hindered phenolic compounds and nitrogen compounds.

The term "metal deactivator" herein refers to a compound having a capacity to prevent metal from deteriorating due to contact with a certain type of compound.

The hindered phenolic compound refers to a phenolic compound having a bulky substituent (for example, a branched or cyclic alkyl group such as a t-butyl group) on at least one of the ortho positions of phenol.

Examples of the nitrogen compounds in the metal deactivator include hydrazide-based nitrogen compounds, amide-based nitrogen compounds, triazole-based nitrogen compounds, and melamine-based nitrogen compounds.

### <<Surfactant>>

As the surfactant, nonionic surfactants and cationic surfactants are exemplary examples. As the nonionic surfactant, for example, an aliphatic alcohol polyoxyethylene adduct, an aromatic alcohol polyoxyethylene adduct, a polyhydric alcohol polyoxyethylene adduct, an aliphatic alcohol polyoxypropylene adduct, an aromatic alcohol polyoxypropylene adduct, and a polyhydric alcohol polyoxypropylene adduct are exemplary examples. As the cationic surfactant, for example, a terminal diamine polyethylene glycol, a terminal diamine polyethylene glycol-polypropylene glycol copolymer, an aliphatic amine polyoxyethylene adduct, an aromatic amine polyoxyethylene adduct, a polyvalent amine polyoxyethylene adduct, and a polyvalent amine polyoxypropylene adduct are exemplary examples.

As described above, the flux according to the present embodiment is used in combination with the polymer (P) having a repeating unit represented by General Formula (p1) in addition to the rosin, the solvent, the thixotropic agent, the dicarboxylic acid, and the compound having a benzotriazole skeleton. By adopting the polymer (P), the reason for which is not clear, it is possible to provide a flux in which cohesiveness of a solder alloy powder is high during reflow, blackening of a flux residue is suppressed, and precipitation with time is unlikely to occur, and temporal stability is good.

As another embodiment of the flux, a solvent containing propylene glycol monoalkyl ether is contained. By using this flux, a change in viscosity (thickening) of the solder paste is suppressed.

Furthermore, by controlling a mixing ratio of the propylene glycol monoalkyl ether and the polymer (P), it is possible to easily achieve both the suppression of precipitation of the compound having a benzotriazole skeleton in the flux and the suppression of an increase in viscosity of the solder paste.

### (Solder paste)

An embodiment of the solder paste contains a solder alloy powder and the flux according to the above-described embodiment.

As the solder alloy constituting the solder alloy powder, a solder alloy having a known composition can be used.

The solder alloy may be an Sn simple substance solder, may be an Sn-Ag-based solder alloy, an Sn-Cu-based solder alloy, an Sn-Ag-Cu-based solder alloy, an Sn-Bi-based solder alloy, an Sn-In-based solder alloy, or the like, or may be a solder alloy obtained by adding Sb, Bi, In, Cu, Zn, As, Ag, Cd, Fe, Ni, Co, Au, Ge, P, or the like to these alloys.

The solder alloy may be an Sn-Pb-based solder alloy or an Sn-Pb-based solder alloy, to which Sb, Bi, In, Cu, Zn, As, Ag, Cd, Fe, Ni, Co, Au, Ge, P, or the like is added.

The solder alloy is preferably a solder alloy containing no Pb, and more preferably a solder alloy consisting of Sn and Bi.

The conditions for soldering in the soldering step may be appropriately set depending on the melting point of the solder alloy. For example, in a case where an Sn-Ag-Cu-based solder alloy is used, the temperature of the molten solder is preferably 230°C to 280°C and more preferably 250°C to 270°C. Alternatively, in a case where an Sn-Bi-based solder alloy (solder alloy containing Sn and Bi) is used, the temperature of the molten solder is preferably 170°C to 220°C and more preferably 180°C to 200°C.

### Content of flux:

In the solder paste of the present embodiment, a content of the flux is preferably 5% to 30% by mass, and more preferably 5% to 15% by mass with respect to a total mass of the solder paste.

According to the solder paste according to the present embodiment described above, since the flux according to the above-described embodiment is used, cohesiveness of the solder alloy powder is high during reflow (occurrence of solder balls is suppressed), and blackening of the flux residue is suppressed.

In addition, according to the solder paste according to the present embodiment, wettability on a land is improved, a change in viscosity (thickening) of the solder paste is suppressed, and temporal stability (suppression of flux separation with time) is improved.

In addition, since the flux according to the above-described embodiment is used, the solder paste according to the present embodiment is particularly suitable for a case where a solder alloy containing Sn and Bi (so-called low-temperature solder) is used as the solder alloy powder.

As other embodiments of the flux and the solder paste, the following configuration can also be adopted.

[21] A flux containing rosin, a polymer (P) having a repeating unit represented by General Formula (p1), a solvent, a thixotropic agent containing polyamide, a dicarboxylic acid represented by General Formula (c1), and a compound having a benzotriazole skeleton, which is selected from the group consisting of a compound represented by General Formula (AZ1-1) and a compound represented by General Formula (AZ1-2). 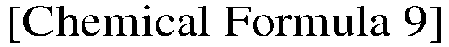 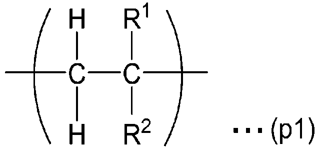 [In the formula, R¹ represents a methyl group or a hydrogen atom. R² represents a hydrocarbon group having 1 or 2 carbon atoms or a hydrogen atom.] 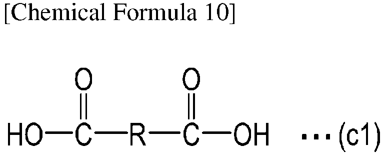 [In the formula, R represents an alkylene group having 1 to 10 carbon atoms, a phenylene group, or a single bond, provided that a methylene group constituting the alkylene group may be substituted with an oxygen atom.] 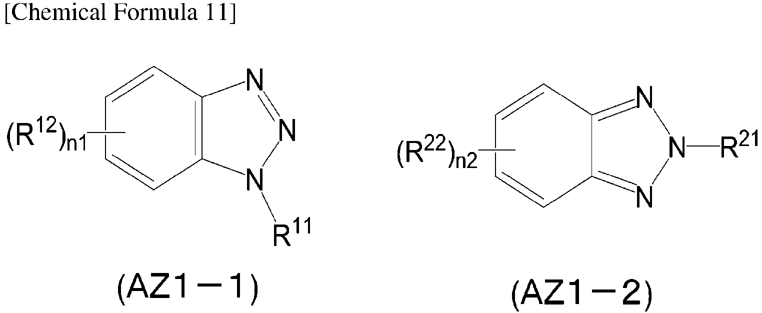 [In the formulae, R¹¹ represents an organic group or a hydrogen atom. R¹² represents a substituent. n1 represents an integer in a range of 0 to 4. R²¹ represents an organic group or a hydrogen atom. R²² represents a substituent. n2 represents an integer in a range of 0 to 4.]

[22] The flux according to [21], in which a weight-average molecular weight of the polymer (P) is 300 to 8,000.
[23] The flux according to [21] or [22], in which a content of the polymer (P) is 1% by mass or more and 15% by mass or less with respect to a total mass of the flux.
[24] The flux according to any one of [21] to [23], in which the solvent includes propylene glycol monoalkyl ether.
[25] The flux according to [24], in which the propylene glycol monoalkyl ether includes at least one selected from the group consisting of tripropylene glycol butyl ether and dipropylene glycol butyl ether.
[26] The flux according to [24] or [25], in which a content of the propylene glycol monoalkyl ether is 5% by mass or more and 50% by mass or less with respect to a total mass of the flux.
[27] The flux according to any one of [24] to [26], in which a mixing ratio of the polymer (P) and the propylene glycol monoalkyl ether is 0.05 or more as a mass ratio represented by the polymer (P)/the propylene glycol monoalkyl ether.
[28] The flux according to any one of [21] to [27], in which a content of the dicarboxylic acid is 0.5% by mass or more and 7.5% by mass or less with respect to a total mass of the flux.
[29] The flux according to any one of [21] to [28], in which a content of the compound having a benzotriazole skeleton is 1% by mass or more and 10% by mass or less with respect to a total mass of the flux.
[30] The flux according to any one of [21] to [29], in which a mixing ratio of the dicarboxylic acid and the compound having a benzotriazole skeleton is 0.2 or more and 3 or less as a mass ratio represented by the dicarboxylic acid/the compound having a benzotriazole skeleton.
[31] The flux according to any one of [21] to [30], in which a content of the rosin is 10% by mass or more and 40% by mass or less with respect to a total mass of the flux.
[32] The flux according to any one of [21] to [31], in which the rosin includes at least one selected from the group consisting of an acrylic acid-modified hydrogenated rosin, a hydrogenated rosin, and a polymerized rosin.
[33] The flux according to any one of [21] to [32], in which a content of the thixotropic agent is 2% by mass or more and 15% by mass or less with respect to a total mass of the flux.
[34] The flux according to [21], in which a content of the rosin is 10% by mass or more and 40% by mass or less, a content of the polymer (P) is 1% by mass or more and 15% by mass or less, a content of the thixotropic agent is 2% by mass or more and 15% by mass or less, a content of the dicarboxylic acid is 0.5% by mass or more and 7.5% by mass or less, and a content of the compound having a benzotriazole skeleton is 1% by mass or more and 10% by mass or less with respect to a total mass (100% by mass) of the flux.
[35] The flux according to [34], in which a weight-average molecular weight of the polymer (P) is 300 to 8,000.
[36] The flux according to [34] or [35], in which the solvent includes propylene glycol monoalkyl ether.
[37] The flux according to [36], in which the propylene glycol monoalkyl ether includes at least one selected from the group consisting of tripropylene glycol butyl ether and dipropylene glycol butyl ether.
[38] The flux according to [36] or [37], in which a content of the propylene glycol monoalkyl ether is 5% by mass or more and 50% by mass or less with respect to a total mass of the flux.
[39] The flux according to any one of [36] to [38], in which a mixing ratio of the polymer (P) and the propylene glycol monoalkyl ether is 0.05 or more as a mass ratio represented by the polymer (P)/the propylene glycol monoalkyl ether.
[40] The flux according to any one of [34] to [39], in which a mixing ratio of the dicarboxylic acid and the compound having a benzotriazole skeleton is 0.2 or more and 3 or less as a mass ratio represented by the dicarboxylic acid/the compound having a benzotriazole skeleton.
[41] The flux according to any one of [34] to [40], in which the rosin includes at least one selected from the group consisting of an acrylic acid-modified hydrogenated rosin, a hydrogenated rosin, and a polymerized rosin.
[42] The flux according to any one of [21] to [41], further containing a phenyl group-substituted imidazole.
[43] The flux according to any one of [21] to [42], in which the flux does not contain a halogen compound.
[44] A solder paste containing a solder alloy powder and the flux according to any one of [21] to [43].
[45] The solder paste according to [44], in which the solder alloy powder consists of a solder alloy containing Sn and Bi.

### [Example]

Hereinafter, the present invention will be described with reference to Examples, but the present invention is not limited to the following Examples.

### <Preparation of flux>

### (Examples 1 to 174 and Comparative Examples 1 to 12)

Each of fluxes of Examples and Comparative Examples, having compositions shown in Tables 1 to 31, was prepared.

In the tables, a content of each raw material indicates a proportion (% by mass) with respect to the total mass (100% by mass) of the flux.

Raw materials used are described below.

### · Rosin

An acrylic acid-modified hydrogenated rosin, a hydrogenated rosin, and a polymerized rosin were used.

### · Polymer (P) having repeating unit represented by General Formula (p1)

The following polybutenes (P1) to (P6), which were copolymers having the repeating unit represented by Chemical Formula (p1-3) and the repeating unit represented by Chemical Formula (p1-4), were used. The polybutenes (P1) to (P6) are copolymeric substance having a molecular structure of a long-chain hydrocarbon, mainly based on isobutene and partially reacted with normal butene.

In addition, the following polybutadiene (P7), which was a polymer having the repeating unit represented by Chemical Formula (p1-5), was used. The polybutadiene (P7) is a homopolymer having 90% or more of repeating units represented by Chemical Formula (p1-5) and 10% or less of repeating units represented by Chemical Formula (p2-4).

Polybutene (P1): weight-average molecular weight of 3,370, number-average molecular weight of 1,558, manufactured by ENEOS Corporation, product name "Grade HV-300"
Polybutene (P2): weight-average molecular weight of 345, number-average molecular weight of 332, manufactured by ENEOS Corporation, product name "Grade LV-7"
Polybutene (P3): weight-average molecular weight of 1,130, number-average molecular weight of 689, manufactured by ENEOS Corporation, product name "Grade HV-15"
Polybutene (P4): weight-average molecular weight of 2,114, number-average molecular weight of 944, manufactured by ENEOS Corporation, product name "Grade HV-50"
Polybutene (P5): weight-average molecular weight of 2,578, number-average molecular weight of 1,136, manufactured by ENEOS Corporation, product name "Grade HV-100"
Polybutene (P6): weight-average molecular weight of 7,773, number-average molecular weight of 4,808, manufactured by ENEOS Corporation, product name "Grade HV-1900"
Polybutadiene (P7): weight-average molecular weight of 3,991, number-average molecular weight of 2,778; manufactured by Nippon Soda Co., Ltd., product name "NISSO-PB B-2000"

### [Measurement method of molecular weight of polymer (P)]

The weight-average molecular weight and the number-average molecular weight (polystyrene equivalent) of the polymer (P) were measured by dissolving and diluting an analysis sample in tetrahydrofuran (THF) and by gel permeation chromatography (GPC). The measurement conditions were as follows.

Analysis device: e2695 manufactured by Waters Corporation
Mobile phase: THF
Columns: TSK guardcolumn HXL (guard column) manufactured by Tosoh Corporation
+TSKgel G3000HXL manufactured by Tosoh Corporation
+TSKgel G2000HXL manufactured by Tosoh Corporation
Column temperature: 40°C
Flow rate: 1.0 (mL/min)
Detector: RI detector, Po(+), Res (1.0 s)
Injection volume: 50 µL
Standard substance: "GPC Standard Polystyrene Kit PStQuick F" manufactured by Tosoh Corporation was used. As a result, the analysis result is in terms of polystyrene equivalent.

### · Solvent

Tripropylene glycol butyl ether, dipropylene glycol butyl ether, propylene glycol monobutyl ether, or tetraethylene glycol dimethyl ether was used.

### · Thixotropic agent

Polyamide or hydrogenated castor oil was used.

### · Dicarboxylic acid

Adipic acid, glutaric acid, diglycolic acid, succinic acid, sebacic acid, dodecanedioic acid, or phthalic acid was used.

### · Monocarboxylic acid

Stearic acid was used.

### · Compound having benzotriazole skeleton

1,2,3-Benzotriazole, 5-methylbenzotriazole, or 2-(2'-hydroxy-5'-methylphenyl)benzotriazole was used.

### · Other components

As the amines, azoles and guanidines were used.

As the azoles, 2-ethylimidazole, 2-ethyl-4-methylimidazole, or 2-phenyl-4-methylimidazole was used.

As the guanidines, 1,3-di-o-tolylguanidine was used.

### <Preparation of solder paste>

Each of the fluxes and the following solder alloy powder were mixed to prepare a solder paste. In all the prepared solder pastes, the flux was set to 10.5% by mass and the solder alloy powder was set to 89.5% by mass.

Solder alloy powder: powder consisting of a solder alloy in which Bi is 58% by mass and the remainder is Sn. A solidus temperature of the solder alloy was 139°C, and a liquidus temperature was 141°C.

A size of the above-described solder alloy powder was a size (particle size distribution) that satisfied the symbol 4 in the classification of powder sizes (Table 2) in JIS Z 3284-1:2014.

### <Evaluation>

As shown below, the evaluation of wettability, the evaluation of cohesiveness of the solder alloy powder (difficulty in occurrence of solder balls), the evaluation of temporal stability (difficulty in occurrence of precipitation with time), the evaluation of change in viscosity of the solder paste (suppression of thickening), the evaluation of suppression of blackening of the flux residue, and the evaluation of temporal stability (flux separation with time) were performed. The evaluation results thereof were shown in Tables 1 to 31.

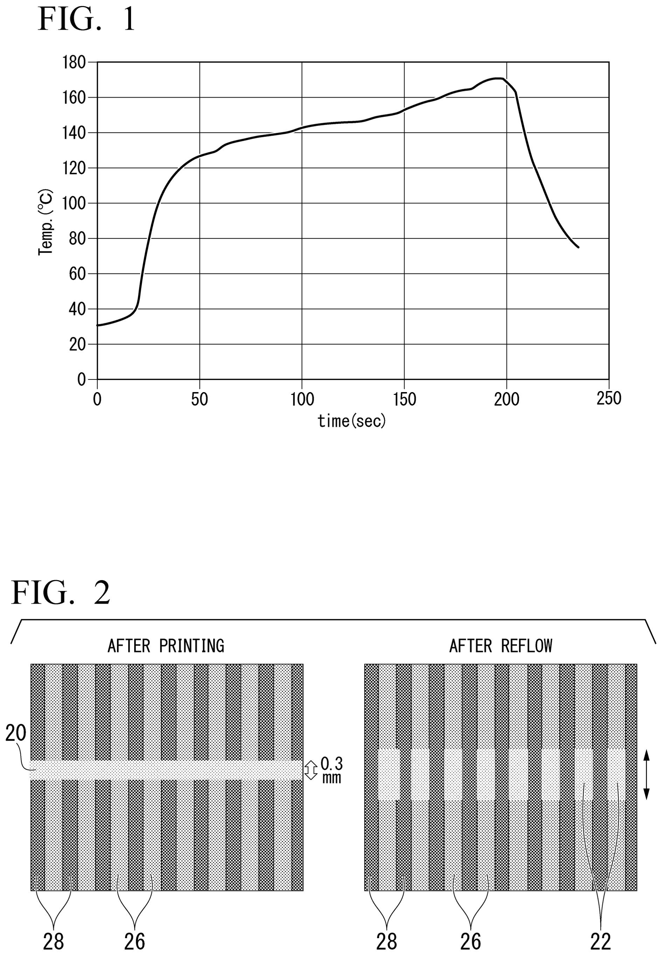

FIG. 1 shows a profile of reflow in the evaluation of the present example.

The temperature in the reflow furnace was set such that the temperature rise rate at 50°C to 130°C was 1.3°C/sec to 2.2°C/sec. The temperature was held at 130°C to 150°C for 60 to 90 seconds. The temperature rise rate at 150°C to 170°C was set to 0.4°C/sec to 1°C/sec. After reaching 170°C, the temperature was held for 30 to 90 seconds in a natural cooling state.

In each evaluation, the evaluation of cohesiveness of the solder alloy powder (difficulty in occurrence of solder balls) was performed in an atmosphere having an oxygen concentration of 1,000 ppm. The other evaluations were performed in an atmospheric environment.

### [Evaluation of wettability]

In the evaluation of wettability, a Cu-OSP-treated glass epoxy board was used as the board. The number of lands was set to 41, the land width was set to 0.27 mm, and the solder resist width was set to 0.37 mm.

FIG. 2 shows a schematic diagram illustrating a method for evaluating wettability in the present example.

As shown in FIG. 2, on the lands 26 (light green portions) and solder resist 28 (dark green portions) formed on the board, the solder paste 20 was printed in a straight line with a length of 0.3 mm and a mask thickness of 0.15 mm, and reflow was performed. After the reflow, a length of the solder alloy 22 that had wet and spread on the land 26 was measured. Wettability was evaluated based on the following determination criteria.

### Determination criteria

Rank 1: average length of the solder alloy 22 that had wet and spread on the land 26 was 700 µm or more.

Rank 2: average length of the solder alloy 22 that had wet and spread on the land 26 was 650 µm or more and less than 700 µm.

Rank 3: average length of the solder alloy 22 that had wet and spread on the land 26 was 600 µm or more and less than 650 µm.

Rank 4: average length of the solder alloy 22 that had wet and spread on the land 26 was less than 600 µm.

### [Evaluation of cohesiveness of solder alloy powder (difficulty in occurrence of solder balls)]

The cohesiveness of the solder alloy powder was evaluated as follows.

A solder paste was printed on a ceramic plate with 6.5 mm φ and a mask thickness of 0.20 mm, and reflow was performed. After the reflow, the occurrence state of solder balls was confirmed. Based on the following determination criteria, the cohesiveness of the solder alloy powder (difficulty in occurrence of solder balls) was evaluated.

### Determination criteria

Rank 1: The solder alloy powder was melted and then coalesces into a single large ball. It was confirmed that less than 15 solder alloy particles having a particle diameter of 150 µm or less were present around the large ball.

Rank 2: The solder alloy powder was melted and then coalesces into a single large ball. It was confirmed that 15 or more and less than 30 solder alloy particles having a particle diameter of 150 µm or less were present around the large ball.

Rank 3: The solder alloy powder was melted and then coalesces into a single large ball. It was confirmed that 30 or more and less than 40 solder alloy particles having a particle diameter of 150 µm or less were present around the large ball.

Rank 4: The solder alloy powder was melted and then coalesces into a single large ball. It was confirmed that 40 or more solder alloy particles having a particle diameter of 150 µm or less were present around the large ball, or solder alloy particles having a particle diameter of more than 150 µm were confirmed, or unaggregated state was confirmed.

### [Evaluation of temporal stability (difficulty in occurrence of precipitation with time)]

Temporal stability (difficulty in occurrence of precipitation with time) was evaluated as follows.

Fluxes were stored at a temperature of 25°C and a relative humidity of 50%. For each flux after 1 week, 1 month, 2 months, and 3 months of the storage, the flux was printed on a slide glass with a thickness of 100 µm, and the precipitate was confirmed. Based on the following determination criteria, temporal stability (difficulty in occurrence of precipitation with time) was evaluated.

### Determination criteria

Rank 1: No precipitate was confirmed after 3 months of storage.

Rank 2: No precipitate was confirmed after 2 months of storage.

Rank 3: No precipitate was confirmed after 1 month of storage.

Rank 4: The precipitate was confirmed after 1 week of storage (that is, the precipitation occurred within 1 week).

### [Evaluation of change in viscosity of solder paste (suppression of thickening)]

The evaluation of the change in viscosity of the solder paste was performed in accordance with JIS Z 3284-3: 2014 "4.2 Viscosity Characteristic Test".

A Malcom PCU-205 was used as the viscometer.

The measurement conditions were set such that a temperature was 25°C, a rotation speed was 10 rpm, and an initial viscosity was the viscosity after 30 minutes from the start of the measurement.

Based on the following determination criteria, the change in viscosity of the solder paste (suppression of thickening) was evaluated.

### Determination criteria

Rank 1: The viscosity after 24 hours from the start of the measurement was 1.05 times or less the initial viscosity.

Rank 2: The viscosity after 12 hours from the start of the measurement was 1.05 times or less the initial viscosity.

Rank 3: The viscosity after 8 hours from the start of the measurement was 1.05 times or less the initial viscosity.

Rank 4: The viscosity after 8 hours from the start of the measurement was more than 1.05 times the initial viscosity.

### [Evaluation of suppression of blackening of flux residue]

The suppression of blackening of the flux residue was evaluated as follows.

A solder paste was printed on a Cu-OSP board with a 5.0 mm φ and a mask thickness of 0.15 mm, and then the board was allowed to stand at a temperature of 25°C and a relative humidity of 50% for 2 hours. Thereafter, reflow was performed, and the blackening state of the flux residue was confirmed by a binarization process. Based on the following determination criteria, the suppression of blackening of the flux residue was evaluated.

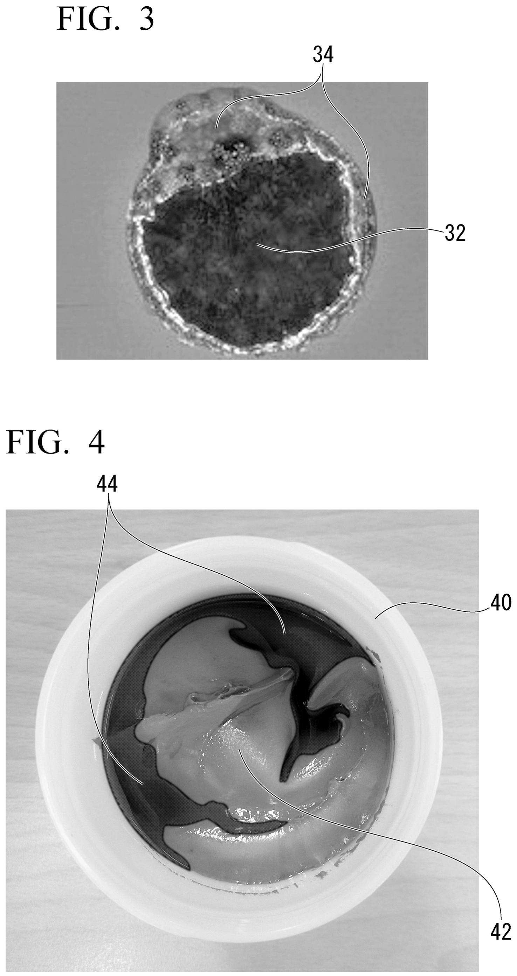

FIG. 3 shows a state in which a flux residue 34 remaining on an outer periphery of a solder alloy 32 after the reflow has been blackened.

### Determination criteria

In a plan view as viewed from above,
Rank 1: The area of blackening in the surface area of the flux residue 34 was 0% or more and less than 10%.

Rank 2: The area of blackening in the surface area of the flux residue 34 was 10% or more and less than 30%.

Rank 3: The area of blackening in the surface area of the flux residue 34 was 30% or more and less than 50%.

Rank 4: The area of blackening in the surface area of the flux residue 34 was 50% or more.

### [Evaluation of temporal stability (flux separation with time)]

Temporal stability (flux separation with time) was evaluated as follows.

A container having an area of a container opening portion of 24 cm² (diameter of the container opening portion of about 5.5 cm) was used as the container.

A solder paste of 500 g was filled into this container, and stored at a temperature of 25°C and a relative humidity of 50% for 7 days. Thereafter, an area of the flux floating (separating) on the surface of the solder paste (proportion of the separated flux occupying the container opening portion: area ratio) was confirmed. Based on the following determination criteria, temporal stability (flux separation with time) was evaluated.

FIG. 4 shows a state in which a flux 44 floats (separates) on a surface of a solder paste 42 after the solder paste 42 filled in a container 40 is stored for a predetermined period.

### Determination criteria

Rank 1: No separation of the flux 44.

Rank 2: The flux 44 was separated, and the separated flux 44 occupied an area of more than 0% and less than 10% of the area of the container opening portion.

Rank 3: The flux 44 was separated, and the separated flux 44 occupied an area of 10% or more and less than 30% of the area of the container opening portion.

Rank 4: The flux 44 was separated, and the separated flux 44 occupied an area of 30% or more of the area of the container opening portion.

**[Table 1]**

| Flux | | Comparative Example 1 | Comparative Example 2 | Comparative Example 3 | Example 1 | Comparative Example 4 |
|---|---|---|---|---|---|---|
| Rosin | Acrylic acid-modified hydrogenated rosin | 29 | 29 | 29 | 29 | 29 |
| Polymer (P) | Polybutene (P1) | 4 | 4 | 0 | 4 | 4 |
| | Polybutadiene (P7) | | | | | |
| Solvent | Tripropylene glycol butyl ether | 30 | 30 | 30 | 30 | 30 |
| | Tetraethylene glycol dimethyl ether | 18.5 | 19.5 | 18.5 | 15.5 | 15.5 |
| Thixotropic agent | Polyamide | 6 | 6 | 6.5 | 6 | 6 |
| | Hydrogenated castor oil | 0.5 | 0.5 | 1 | 0.5 | 0.5 |
| Dicarboxylic acid | Adipic acid | 0 | 3 | 3 | 3 | 0 |
| Monocarboxylic acid | Stearic acid | | | | | 3 |
| Compound having benzotriazole skeleton | 1,2,3-Benzotriazole | 4 | 0 | 4 | 4 | 4 |
| Azoles | 2-Phenyl-4-methylimidazole | 5 | 5 | 5 | 5 | 5 |
| Guanidines | 1,3-Di-o-tolylguanidine | 3 | 3 | 3 | 3 | 3 |
| Total/% by mass | | 100 | 100 | 100 | 100 | 100 |
| Polymer (P)/propylene glycol monoalkyl ether, mass ratio | | 0.13 | 0.13 | 0 | 0.13 | 0.13 |
| Evaluation | Wettability | 1 | 1 | 1 | 1 | - |
| | Cohesiveness of solder alloy powder (difficulty in occurrence of solder balls) | 4 | 1 | 1 | 1 | 4 |
| | Temporal stability (difficulty in occurrence of precipitation with time) | 1 | 1 | 4 | 1 | 1 |
| | Change in viscosity of solder paste (suppression of thickening) | 1 | 1 | 1 | 1 | 1 |
| | Suppression of blackening of flux residue | 1 | 4 | 1 | 1 | 1 |
| | Temporal stability (flux separation with time) | 1 | 1 | 1 | 1 | - |

From the results shown in Table 1, in a case where the flux of Example 1 to which the present invention was applied was used, it was confirmed that the cohesiveness of the solder alloy powder (difficulty in occurrence of solder balls) was high during reflow, the blackening of the flux residue was suppressed, and the precipitation with time was unlikely to occur and the temporal stability was good.

On the other hand, in a case where the flux of Comparative Example 1, which lacked the dicarboxylic acid, was used, the evaluation of the cohesiveness of the solder alloy powder was poor.

In a case where the flux of Comparative Example 4, which contained a monocarboxylic acid instead of the dicarboxylic acid, was used, the evaluation of the cohesiveness of the solder alloy powder was also poor.

In a case where the flux of Comparative Example 2, which lacked the compound having a benzotriazole skeleton, was used, the evaluation of the suppression of blackening of the flux residue was poor.

In a case where the flux of Comparative Example 3, which lacked the polymer (P), was used, the evaluation of temporal stability (difficulty in occurrence of precipitation with time) was inferior.

**[Table 2]**

| Flux | | Comparative Example 5 | Comparative Example 6 | Example 1 | Example 15 |
|---|---|---|---|---|---|
| Rosin | Acrylic acid-modified hydrogenated rosin | 29 | 29 | 29 | 29 |
| Polymer (P) | Polybutene (P1) | 0 | 0 | 4 | |
| | Polybutadiene (P7) | | | | 4 |
| Solvent | Tripropylene glycol butyl ether | 30 | 30 | 30 | 30 |
| | Tetraethylene glycol dimethyl ether | 23.5 | 19.5 | 15.5 | 15.5 |
| Thixotropic agent | Polyamide | 6 | 6 | 6 | 6 |
| | castor of Hydrogenated castor oil | 0.5 | 0.5 | 0.5 | 0.5 |
| Dicarboxylic acid | Adipic acid | 3 | 3 | 3 | 3 |
| Compound having benzotriazole skeleton | 1,2,3-Benzotriazole | 0 | 4 | 4 | 4 |
| Azoles | 2-Phenyl-4-methylimidazole | 5 | 5 | 5 | 5 |
| Guanidines | 1,3-Di-o-tolylguanidine | 3 | 3 | 3 | 3 |
| Total/% by mass | | 100 | 100 | 100 | 100 |
| Polymer (P)/propylene glycol monoalkyl ether, mass ratio | | 0 | 0 | 0.13 | 0.13 |
| Evaluation | Wettability | - | - | 1 | - |
| | Cohesiveness of solder alloy powder (difficulty in occurrence of solder balls) | 1 | 1 | 1 | 1 |
| | Temporal stability (difficulty in occurrence of precipitation with time) | - | 4 | 1 | 1 |
| | Change in viscosity of solder paste (suppression of thickening) | 1 | 1 | 1 | 1 |
| | Suppression of blackening of flux residue | 4 | 1 | 1 | 1 |
| | Temporal stability (flux separation with time) | - | - | 1 | 1 |

In Table 2, from the results in a case where the flux of Comparative Example 5 was used, it was confirmed that the dicarboxylic acid was effective as an activator blended in the flux with respect to the cohesiveness of the solder alloy powder, and on the other hand, the evaluation of suppression of blackening of the flux residue was inferior.

From the results in a case where the flux of Comparative Example 6 was used, it was confirmed that the compound having a benzotriazole skeleton was effective in suppressing blackening of the flux residue, and on the other hand, the evaluation of temporal stability (difficulty in occurrence of precipitation with time) was poor.

On the other hand, from the results in a case where each of the fluxes of Examples 1 and 15 was used, it was confirmed that, by further using the polymer (P) in combination, the evaluations of the cohesiveness of the solder alloy powder, the suppression of blackening of the flux residue, and temporal stability (difficulty in occurrence of precipitation with time) were all good.

**[Table 3]**

| Flux | | Comparative Example 7 | Example 34 | Example 1 |
|---|---|---|---|---|
| Rosin | Acrylic acid-modified hydrogenated rosin | 29 | 29 | 29 |
| Polymer (P) | Polybutene (P1) | 0 | 4 | 4 |
| | Polybutadiene (P7) | | | |
| Solvent | Tripropylene glycol butyl ether | 0 | 0 | 30 |
| | Tetraethylene glycol dimethyl ether | 49.5 | 45.5 | 15.5 |
| Thixotropic agent | Polyamide | 6 | 6 | 6 |
| | Hydrogenated castor oil | 0.5 | 0.5 | 0.5 |
| Dicarboxylic acid | Adipic acid | 3 | 3 | 3 |
| Compound having benzotriazole skeleton | 1,2,3-Benzotriazole | 4 | 4 | 4 |
| Azoles | 2-Phenyl-4-methylimidazole | 5 | 5 | 5 |
| Guanidines | 1,3-Di-o-tolylguanidine | 3 | 3 | 3 |
| Total/% bv mass | | 100 | 100 | 100 |
| Polymer (P)/propylene glycol monoalkyl ether, mass ratio | | - | - | 0.13 |
| Evaluation | Wettability | - | 1 | 1 |
| | Cohesiveness of solder alloy powder (difficulty in occurrence of solder balls) | 1 | 1 | 1 |
| | Temporal stability (difficulty in occurrence of precipitation with time) | 3 | 1 | 1 |
| | Change in viscosity of solder paste (suppression of thickening) | 4 | 4 | 1 |
| | Suppression of blackening of flux residue | 1 | 1 | 1 |
| | Temporal stability (flux separation with time) | - | 1 | 1 |

In Table 3, from the comparison between Example 1 and Example 34, it was confirmed that the change in viscosity of the solder paste could be made smaller (the effect of suppressing thickening was enhanced) by including the propylene glycol monoalkyl ether as the solvent.

In a case where the flux of Comparative Example 7, which lacked both the polymer (P) and the propylene glycol monoalkyl ether, was used, the evaluations of the temporal stability (difficulty in occurrence of precipitation with time) and the change in viscosity of the solder paste (suppression of thickening) were both poor.

**[Table 4]**

| Flux | | Example 1 | Example 2 | Example 3 | Example 4 | Example 5 | Example 6 | Example 7 | Example 8 |
|---|---|---|---|---|---|---|---|---|---|
| Rosin | Acrylic acid-modified hydrogenated rosin | 29 | 19 | | | 29 | 29 | 29 | 29 |
| | Hydrogenated rosin | | 10 | 10 | | | | | |
| | Polymerized rosin | | | 19 | 29 | | | | |
| Polymer (P) | Polybutene (P1) | 4 | 4 | 4 | 4 | 4 | 4 | 4 | 4 |
| Solvent | Tripropylene glycol butyl ether | 30 | 30 | 30 | 30 | | 15 | | 15 |
| | Dipropylene glycol butyl ether | | | | | 30 | 15 | | |
| | Propylene glycol monobutyl ether | | | | | | | 30 | 15 |
| | Tetraethylene glycol dimethyl ether | 15.5 | 15.5 | 15.5 | 15.5 | 15.5 | 15.5 | 15.5 | 15.5 |
| Thixotropic agent | Polyamide | 6 | 6 | 6 | 6 | 6 | 6 | 6 | 6 |
| | Hydrogenated castor oil | 0.5 | 0.5 | 0.5 | 0.5 | 0.5 | 0.5 | 0.5 | 0.5 |
| Dicarboxylic acid | Adipic acid | 3 | 3 | 3 | 3 | 3 | 3 | 3 | 3 |
| Compound having benzotriazole skeleton | 1,2,3-Benzotriazole | 4 | 4 | 4 | 4 | 4 | 4 | 4 | 4 |
| Azoles | 2-Phenyl-4-methylimidazole | 5 | 5 | 5 | 5 | 5 | 5 | 5 | 5 |
| Guanidines | 1,3-Di-o-tolylguanidine | 3 | 3 | 3 | 3 | 3 | 3 | 3 | 3 |
| Total/% by mass | | 100 | 100 | 100 | 100 | 100 | 100 | 100 | 100 |
| Polymer (P)/propylene glycol monoalkyl ether, mass ratio | | 0.13 | 0.13 | 0.13 | 0.13 | 0.13 | 0.13 | 0.13 | 0.13 |
| Evaluation | Wettability | 1 | 1 | 1 | 1 | 1 | 1 | 1 | 1 |
| | Cohesiveness of solder alloy powder (difficulty in occurrence of solder balls) | 1 | 1 | 1 | 1 | 1 | 1 | 1 | 1 |
| | Temporal stability (difficulty in occurrence of precipitation with time) | 1 | 1 | 1 | 1 | 1 | 1 | 1 | 1 |
| | Change in viscosity of solder paste (suppression of thickening) | 1 | 1 | 1 | 1 | 1 | 1 | 3 | 2 |
| | Suppression of blackening of flux residue | 1 | 1 | 1 | 1 | 1 | 1 | 1 | 1 |
| | Temporal stability (flux separation with time) | 1 | 1 | 1 | 1 | 1 | 1 | 1 | 1 |

**[Table 5]**

| Flux | | Example 1 | Example 9 | Example 10 | Example 11 | Example 12 | Example 13 | Example 14 | Example 15 |
|---|---|---|---|---|---|---|---|---|---|
| Rosin | Acrylic acid-modified hydrogenated rosin | 29 | 29 | 29 | 29 | 29 | 29 | 29 | 29 |
| Polymer (P) | Polybutene (P1) | 4 | | | | | | | |
| | Polybutene (P2) | | 4 | | | | | 2 | |
| | Polybutene (P3) | | | 4 | | | | | |
| | Polybutene (P4) | | | | 4 | | | | |
| | Polybutene (P5) | | | | | 4 | | | |
| | Polybutene (P6) | | | | | | 4 | 2 | |
| | Polybutadiene (P7) | | | | | | | | 4 |
| Solvent | Tripropylene glycol butyl ether | 30 | 30 | 30 | 30 | 30 | 30 | 30 | 30 |
| | Tetraethylene glycol dimethyl ether | 15.5 | 15.5 | 15.5 | 15.5 | 15.5 | 15.5 | 15.5 | 15.5 |
| Thixotropic agent | Polyamide | 6 | 6 | 6 | 6 | 6 | 6 | 6 | 6 |
| | Hydrogenated castor oil | 0.5 | 0.5 | 0.5 | 0.5 | 0.5 | 0.5 | 0.5 | 0.5 |
| Dicarboxylic acid | Adipic acid | 3 | 3 | 3 | 3 | 3 | 3 | 3 | 3 |
| Compound having benzotriazole skeleton | 1,2,3-Benzotriazole | 4 | 4 | 4 | 4 | 4 | 4 | 4 | 4 |
| Azoles | 2-Phenyl-4-methylimidazole | 5 | 5 | 5 | 5 | 5 | 5 | 5 | 5 |
| Guanidines | 1,3-Di-o-tolylguanidine | 3 | 3 | 3 | 3 | 3 | 3 | 3 | 3 |
| Total/% by mass | | 100 | 100 | 100 | 100 | 100 | 100 | 100 | 100 |
| Polymer (P)/propylene glycol monoalkyl ether, mass ratio | | 0.13 | 0.13 | 0.13 | 0.13 | 0.13 | 0.13 | 0.13 | 0.13 |
| Evaluation | Wettability | 1 | 1 | 1 | 1 | 1 | 1 | 1 | - |
| | Cohesiveness of solder alloy powder (difficulty in occurrence of solder balls) | 1 | 1 | 1 | 1 | 1 | 1 | 1 | 1 |
| | Temporal stability (difficulty in occurrence of precipitation with time) | 1 | 1 | 1 | 1 | 1 | 1 | 1 | 1 |
| | Change in viscosity of solder paste (suppression of thickening) | 1 | 1 | 1 | 1 | 1 | 1 | 1 | 1 |
| | Suppression of blackening of flux residue | 1 | 1 | 1 | 1 | 1 | 1 | 1 | 1 |
| | Temporal stability (flux separation with time) | 1 | 1 | 1 | 1 | 1 | 1 | 1 | 1 |

From the results shown in Tables 4 and 5, in a case where the flux of Examples 1 to 15 to which the present invention was applied was used, it was confirmed that the cohesiveness of the solder alloy powder was high during reflow, the blackening of the flux residue was suppressed, and the precipitation with time was unlikely to occur and the temporal stability was good.

From the comparison of Examples 1, 5, and 7, it was confirmed that the change in viscosity of the solder paste could be made smaller (the effect of suppressing thickening was enhanced) by adopting, among the propylene glycol monoalkyl ethers as the solvent, one selected from the group consisting of tripropylene glycol butyl ether and dipropylene glycol butyl ether.

**[Table 6]**

| Flux | | Example 16 | Example 17 | Example 18 | Example 19 | Example 20 | Example 21 |
|---|---|---|---|---|---|---|---|
| Rosin | Acrylic acid-modified hydrogenated rosin | 29 | 29 | 29 | 29 | 29 | 29 |
| Polymer (P) | Polybutene (P1) | 1 | 1 | 1 | 1 | 1 | 1 |
| Solvent | Tripropylene glycol butyl ether | 5 | 10 | 20 | 30 | 40 | 47.5 |
| | Tetraethylene glycol dimethyl ether | 42.5 | 37.5 | 27.5 | 17.5 | 7.5 | 0 |
| Thixotropic agent | Polyamide | 6.5 | 6.5 | 6.5 | 6.5 | 6.5 | 6.5 |
| | Hydrogenated castor oil | 1 | 1 | 1 | 1 | 1 | 1 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% hv mass | | 100 | 100 | 100 | 100 | 100 | 100 |
| Polymer (P)/propylene glycol monoalkyl ether, mass ratio | | 0.20 | 0.10 | 0.050 | 0.033 | 0.025 | 0.021 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 2 | 3 | 3 | 3 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 7]**

| Flux | | Example 22 | Example 23 | Example 24 | Example 25 | Example 26 | Example 27 |
|---|---|---|---|---|---|---|---|
| Rosin | Acrylic acid-modified hydrogenated rosin | 29 | 29 | 29 | 29 | 29 | 29 |
| Polymer (P) | Polybutene (P1) | 2 | 2 | 2 | 2 | 2 | 2 |
| Solvent | Tripropylene glycol butyl ether | 5 | 10 | 20 | 30 | 40 | 47 |
| | Tetraethylene glycol dimethyl ether | 42 | 37 | 27 | 17 | 7 | 0 |
| Thixotropic agent | Polyamide | 6 | 6 | 6 | 6 | 6 | 6 |
| | Hydrogenated castor oil | 1 | 1 | 1 | 1 | 1 | 1 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 0.40 | 0.20 | 0.10 | 0.067 | 0.050 | 0.043 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 2 | 2 | 3 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 8]**

| Flux | | Example 28 | Example 29 | Example 30 | Example 31 | Example 32 | Example 33 |
|---|---|---|---|---|---|---|---|
| Rosin | Acrylic acid-modified hydrogenated rosin | 29 | 29 | 29 | 29 | 29 | 29 |
| Polymer (P) | Polybutene (P1) | 3 | 3 | 3 | 3 | 3 | 3 |
| Solvent | Tripropylene glycol butyl ether | 5 | 10 | 20 | 30 | 40 | 46 |
| | Tetraethylene glycol dimethyl ether | 41 | 36 | 26 | 16 | 6 | 0 |
| Thixotropic agent | Polyamide | 6 | 6 | 6 | 6 | 6 | 6 |
| | Hydrogenated castor oil | 1 | 1 | 1 | 1 | 1 | 1 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 0.60 | 0.30 | 0.15 | 0.10 | 0.075 | 0.065 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 2 | 2 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 9]**

| Flux | | Example 34 | Example 35 | Example 36 | Example 37 | Example 38 | Example 39 | Example 40 |
|---|---|---|---|---|---|---|---|---|
| Rosin | Acrylic acid-modified hydrogenated rosin | 29 | 29 | 29 | 29 | 29 | 29 | 29 |
| Polymer (P) | Polybutene (P1) | 4 | 4 | 4 | 4 | 4 | 4 | 4 |
| Solvent | Tripropylene glycol butyl ether | 0 | 5 | 10 | 20 | 30 | 40 | 45.5 |
| | Tetraethylene glycol dimethyl ether | 45.5 | 40.5 | 35.5 | 25.5 | 15.5 | 5.5 | 0 |
| Thixotropic agent | Polyamide | 6 | 6 | 6 | 6 | 6 | 6 | 6 |
| | Hydrogenated castor oil | 0.5 | 0.5 | 0.5 | 0.5 | 0.5 | 0.5 | 0.5 |
| Dicarboxylic acid | Adipic acid | 3 | 3 | 3 | 3 | 3 | 3 | 3 |
| Compound having benzotriazole skeleton | 1,2,3-Benzotriazole | 4 | 4 | 4 | 4 | 4 | 4 | 4 |
| Azoles | 2-Phenyl-4-methylimidazole | 5 | 5 | 5 | 5 | 5 | 5 | 5 |
| Guanidines | 1,3-Di-o-tolylguanidine | 3 | 3 | 3 | 3 | 3 | 3 | 3 |
| Total/% by mass | | 100 | 100 | 100 | 100 | 100 | 100 | 100 |
| Polymer (P)/propylene glycol monoalkyl ether, mass ratio | | - | 0.80 | 0.40 | 0.20 | 0.13 | 0.10 | 0.088 |
| Evaluation | Wettability | 1 | 1 | 1 | 1 | 1 | 1 | 1 |
| | Cohesiveness of solder alloy powder (difficulty in occurrence of solder balls) | 1 | 1 | 1 | 1 | 1 | 1 | 1 |
| | Temporal stability (difficulty in occurrence of precipitation with time) | 1 | 1 | 1 | 1 | 1 | 1 | 2 |
| | Change in viscosity of solder paste (suppression of thickening) | 4 | 3 | 2 | 1 | 1 | 1 | 1 |
| | Suppression of blackening of flux residue | 1 | 1 | 1 | 1 | 1 | 1 | 1 |
| | Temporal stability (flux separation with time) | 1 | 1 | 1 | 1 | 1 | 1 | 1 |

**[Table 10]**

| Flux | | Example 41 | Example 42 | Example 43 | Example 44 | Example 45 | Example 46 |
|---|---|---|---|---|---|---|---|
| Rosin | Acrylic acid-modified hydrogenated rosin | 29 | 29 | 29 | 29 | 29 | 29 |
| Polymer (P) | Polybutene (P1) | 5 | 5 | 5 | 5 | 5 | 5 |
| Solvent | Tripropylene glycol butyl ether | 5 | 10 | 20 | 30 | 40 | 45 |
| | Tetraethylene glycol dimethyl ether | 40 | 35 | 25 | 15 | 5 | 0 |
| Thixotropic agent | Polyamide | 5.5 | 5.5 | 5.5 | 5.5 | 5.5 | 5.5 |
| | Hydrogenated castor oil | 0.5 | 0.5 | 0.5 | 0.5 | 0.5 | 0.5 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 1.00 | 0.50 | 0.25 | 0.17 | 0.13 | 0.11 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 1 | 1 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 11]**

| Flux | | Example 47 | Example 48 | Example 49 | Example 50 | Example 51 | Example 52 |
|---|---|---|---|---|---|---|---|
| Rosin | Acrylic acid-modified hydrogenated rosin | 29 | 29 | 29 | 29 | 29 | 29 |
| Polymer (P) | Polybutene (P1) | 6 | 6 | 6 | 6 | 6 | 6 |
| Solvent | Tripropylene glycol butyl ether | 5 | 10 | 20 | 30 | 40 | 44 |
| | Tetraethylene glycol dimethyl ether | 39 | 34 | 24 | 14 | 4 | 0 |
| Thixotropic agent | Polyamide | 5.5 | 5.5 | 5.5 | 5.5 | 5.5 | 5.5 |
| | Hydrogenated castor oil | 0.5 | 0.5 | 0.5 | 0.5 | 0.5 | 0.5 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 1.20 | 0.60 | 0.30 | 0.20 | 0.15 | 0.14 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 1 | 1 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 12]**

| Flux | | Example 53 | Example 54 | Example 55 | Example 56 | Example 57 | Example 58 |
|---|---|---|---|---|---|---|---|
| Rosin | Acrylic acid-modified hydrogenated rosin | 29 | 29 | 29 | 29 | 29 | 29 |
| Polymer (P) | Polybutene (P1) | 10 | 15 | 15 | 15 | 15 | 15 |
| Solvent | Tripropylene glycol butyl ether | 30 | 5 | 10 | 20 | 30 | 37 |
| | Tetraethylene glycol dimethyl ether | 11 | 32 | 27 | 17 | 7 | 0 |
| Thixotropic agent | Polyamide | 5 | 4 | 4 | 4 | 4 | 4 |
| | Hydrogenated castor oil | | | | | | |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 0.33 | 3.00 | 1.50 | 0.75 | 0.50 | 0.41 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 1 | 1 |
| | Change in viscosity of solder paste (suppression of thickening) | 1 | 3 | 2 | 1 | 1 | 1 |
| | Suppression of blackening of flux residue | 1 | 1 | 1 | 1 | 1 | 1 |
| | Temporal stability (flux separation with time) | 2 | 3 | 3 | 3 | 3 | 3 |

From the results shown in Tables 6 to 12, it was confirmed that the change in viscosity of the solder paste could be made smaller (the effect of suppressing thickening was enhanced) by setting the content of the propylene glycol monoalkyl ether to 5% by mass or more, preferably 10% by mass or more, and more preferably more than 10% by mass.

From the results shown in Tables 6 to 12, it was confirmed that, in a case where the mass ratio represented by polymer (P)/propylene glycol monoalkyl ether was 0.05 or more, the precipitation of the compound having a benzotriazole skeleton in the flux was likely to be suppressed, and temporal stability (difficulty in occurrence of precipitation with time) was improved.

**[Table 13]**

| Flux | | Comparative Example 8 | Example 59 | Example 60 | Example 61 | Example 62 | Example 63 | Example 64 | Example 65 |
|---|---|---|---|---|---|---|---|---|---|
| Rosin | Acrylic acid-modified hydrogenated rosin | 29 | 29 | 29 | 29 | 29 | 29 | 29 | 29 |
| Polymer (P) | Polybutene (P1) | 4 | 4 | 4 | 4 | 4 | 4 | 4 | 4 |
| Solvent | Tripropylene glycol butyl ether | 30 | 30 | 30 | 30 | 30 | 30 | 30 | 30 |
| | Tetraethylene glycol dimethyl ether | 18.5 | 18 | 17.5 | 16.5 | 14.5 | 13.5 | 12.5 | 11.5 |
| Thixotropic agent | Polyamide | 6 | 6 | 6 | 6 | 6 | 6 | 6 | 6 |
| | Hydrogenated castor oil | 0.5 | 0.5 | 0.5 | 0.5 | 0.5 | 0.5 | 0.5 | 0.5 |
| Dicarboxylic acid | Adipic acid | 0 | 0.5 | 1 | 2 | 4 | 5 | 6 | 7.5 |
| | Glutaric acid | | | | | | | | |
| | Diglycolic acid | | | | | | | | |
| | Succinic acid | | | | | | | | |
| | Sebacic acid | | | | | | | | |
| | Dodecanedioic acid | | | | | | | | |
| | Phthalic acid | | | | | | | | |
| Compound having benzotriazole skeleton | 1,2,3-Benzotriazole | 4 | 4 | 4 | 4 | 4 | 4 | 4 | 4 |
| Azoles | 2-Phenyl-4-methylimidazole | 5 | 5 | 5 | 5 | 5 | 5 | 5 | 5 |
| Guanidines | 1,3-Di-o-tolylguanidine | 3 | 3 | 3 | 3 | 3 | 3 | 3 | 3 |
| Total/% by mass | | 100 | 100 | 100 | 100 | 100 | 100 | 100 | 100 |
| Polymer (P)/propylene glycol monoalkyl ether, mass ratio | | 0.13 | 0.13 | 0.13 | 0.13 | 0.13 | 0.13 | 0.13 | 0.13 |
| Dicarboxylic acid/compound having benzotriazole skeleton, mass ratio | | 0 | 0.125 | 0.25 | 0.50 | 1.00 | 1.25 | 1.50 | 1.75 |
| Evaluation | Wettability | 1 | 1 | 1 | 1 | 1 | 1 | 1 | 1 |
| | Cohesiveness of solder alloy powder (difficulty in occurrence of solder balls) | 4 | 3 | 2 | 1 | 1 | 1 | 1 | 1 |
| | Temporal stability (difficulty in occurrence of precipitation with time) | 1 | 1 | 1 | 1 | 1 | 1 | 1 | 1 |
| | Change in viscosity of solder paste (suppression of thickening) | 1 | 1 | 1 | 1 | 1 | 2 | 2 | 3 |
| | Suppression of blackening of flux residue | 1 | 1 | 1 | 1 | 1 | 1 | 1 | 1 |
| | Temporal stability (flux separation with time) | 1 | 1 | 1 | 1 | 1 | 1 | 1 | 1 |

**[Table 14]**

| Flux | | Example 66 | Example 67 | Example 68 | Example 69 | Example 70 |
|---|---|---|---|---|---|---|
| Rosin | Acrylic acid-modified hydrogenated rosin | 29 | 29 | 29 | 29 | 29 |
| Polymer (P) | Polybutene (P1) | 4 | 4 | 4 | 4 | 4 |
| Solvent | Tripropylene glycol butyl ether | 30 | 30 | 30 | 30 | 30 |
| | Tetraethylene glycol dimethyl ether | 15.5 | 15.5 | 15.5 | 15.5 | 15.5 |
| Thixotropic agent | Polyamide | 6 | 6 | 6 | 6 | 6 |
| | Hydrogenated castor oil | 0.5 | 0.5 | 0.5 | 0.5 | 0.5 |
| Dicarboxylic acid | Adipic acid | | | | | |
| | Glutaric acid | | | | | |
| | Diglycolic acid | 3 | | | | |
| | Succinic acid | | 3 | | | |
| | Sebacic acid | | | 3 | | |
| | Dodecanedioic acid | | | | 3 | |
| | Phthalic acid | | | | | 3 |
| Compound having benzotriazole skeleton | 1,2,3-Benzotriazole | 4 | 4 | 4 | 4 | 4 |
| Azoles | 2-Phenyl-4-methylimidazole | 5 | 5 | 5 | 5 | 5 |
| Guanidines | 1,3-Di-o-tolvlguanidine | 3 | 3 | 3 | 3 | 3 |
| Total/% by mass | | 100 | 100 | 100 | 100 | 100 |
| Polymer (P)/propylene glycol monoalkyl ether, mass ratio | | 0.13 | 0.13 | 0.13 | 0.13 | 0.13 |
| Dicarboxylic acid/compound having benzotriazole skeleton, mass ratio | | 0.75 | 0.75 | 0.75 | 0.75 | 0.75 |
| Evaluation | Wettability | 1 | 1 | 1 | 1 | 1 |
| | Cohesiveness of solder alloy powder (difficulty in occurrence of solder balls) | 1 | 1 | 1 | 2 | 3 |
| | Temporal stability (difficulty in occurrence of precipitation with time) | 1 | 1 | 1 | 1 | 1 |
| | Change in viscosity of solder paste (suppression of thickening) | 1 | 1 | 1 | 1 | 1 |
| | Suppression of blackening of flux residue | 1 | 1 | 1 | 1 | 1 |
| | Temporal stability (flux separation with time) | 1 | 1 | 1 | 1 | 1 |

In a case where the fluxes of Examples 59 to 70 to which the present invention was applied were used, it was confirmed that the cohesiveness of the solder alloy powder (difficulty in occurrence of solder balls) was high during reflow, the blackening of the flux residue was suppressed, and the precipitation with time was unlikely to occur and the temporal stability was good.

In a case where the flux of Comparative Example 8, which lacked the dicarboxylic acid, was used, the evaluation of the cohesiveness of the solder alloy powder was poor.

**[Table 15]**

| Flux | | Comparative Example 9 | Example 71 | Example 72 | Example 73 | Example 74 | Example 75 | Example 76 |
|---|---|---|---|---|---|---|---|---|
| Rosin | Acrylic acid-modified hydrogenated rosin | 29 | 29 | 29 | 29 | 29 | 29 | 29 |
| Polymer (P) | Polybutene (P1) | 4 | 4 | 4 | 4 | 4 | 4 | 4 |
| Solvent | Tripropylene glycol butyl ether | 30 | 30 | 30 | 30 | 30 | 30 | 30 |
| | Tetraethylene glycol dimethyl ether | 19.5 | 18.5 | 17.5 | 16.5 | 14.5 | 13.5 | 9.5 |
| Thixotropic agent | Polyamide | 6 | 6 | 6 | 6 | 6 | 6 | 6 |
| | Hydrogenated castor oil | 0.5 | 0.5 | 0.5 | 0.5 | 0.5 | 0.5 | 0.5 |
| Dicarboxylic acid | Adipic acid | 3 | 3 | 3 | 3 | 3 | 3 | 3 |
| Compound having benzotriazole skeleton | 1,2,3-Benzotriazole | 0 | 1 | 2 | 3 | 5 | 6 | 10 |
| Azoles | 2-Phenyl-4-methylimidazole | 5 | 5 | 5 | 5 | 5 | 5 | 5 |
| Guanidines | 1,3-Di-o-tolylguanidine | 3 | 3 | 3 | 3 | 3 | 3 | 3 |
| Total/% by mass | | 100 | 100 | 100 | 100 | 100 | 100 | 100 |
| Polymer (P)/propylene glycol monoalkyl ether, mass ratio | | 0.13 | 0.13 | 0.13 | 0.13 | 0.13 | 0.13 | 0.13 |
| Dicarboxylic acid/compound having benzotriazole skeleton, mass ratio | | - | 3.00 | 1.50 | 1.00 | 0.60 | 0.50 | 0.30 |
| Evaluation | Wettability | 1 | 1 | 1 | 1 | 1 | 2 | 3 |
| | Cohesiveness of solder alloy powder (difficulty in occurrence of solder balls) | 1 | 1 | 1 | 1 | 1 | 1 | 1 |
| | Temporal stability (difficulty in occurrence of precipitation with time) | 1 | 1 | 1 | 1 | 1 | 1 | 1 |
| | Change in viscosity of solder paste (suppression of thickening) | 1 | 1 | 1 | 1 | 1 | 1 | 1 |
| | Suppression of blackening of flux residue | 4 | 2 | 2 | 1 | 1 | 1 | 1 |
| | Temporal stability (flux separation with time) | 1 | 1 | 1 | 1 | 1 | 1 | 1 |

In a case where the fluxes of Examples 71 to 76 to which the present invention was applied were used, it was confirmed that the cohesiveness of the solder alloy powder (difficulty in occurrence of solder balls) was high during reflow, the blackening of the flux residue was suppressed, and the precipitation with time was unlikely to occur and the temporal stability was good.

In a case where the flux of Comparative Example 9, which lacked the compound having a benzotriazole skeleton, was used, the evaluation of the suppression of blackening of the flux residue was poor.

**[Table 16]**

| Flux | | Example 77 | **Example** 78 | Example 79 | Example 80 |
|---|---|---|---|---|---|
| Rosin | Acrylic acid-modified hydrogenated rosin | 29 | 29 | 29 | 29 |
| Polymer (P) | Polybutene (P1) | 4 | 4 | 4 | 4 |
| Solvent | Tripropylene glycol butyl ether | 30 | 30 | 30 | 30 |
| | Tetraethylene glycol dimethyl ether | 14.5 | 15.5 | 14.5 | 15.5 |
| Thixotropic agent | Polyamide | 6 | 6 | 6 | 6 |
| | Hydrogenated castor oil | 0.5 | 0.5 | 0.5 | 0.5 |
| Dicarboxylic acid | Adipic acid | 3 | 3 | 3 | 3 |
| Compound having benzotriazole skeleton | 1,2,3-Benzotriazole | 3 | | 3 | |
| | 5-Methylbenzotriazole | 2 | 4 | | |
| | 2-(2'-Hydroxy-5'-methylphenyl)benzotriazole | | | 2 | 4 |
| Azoles | 2-Phenyl-4-methylimidazole | 5 | 5 | 5 | 5 |
| Guanidines | 1,3-Di-o-tolylguanidine | 3 | 3 | 3 | 3 |
| Total/% by mass | | 100 | 100 | 100 | 100 |
| Polymer (P)/propylene glycol monoalkyl ether, mass ratio | | 0.13 | 0.13 | 0.13 | 0.13 |
| Dicarboxylic acid/compound having benzotriazole skeleton, mass ratio | | 0.60 | 0.75 | 0.60 | 0.75 |
| Evaluation | Wettability | 1 | 1 | 1 | 1 |
| | Cohesiveness of solder alloy powder (difficulty in occurrence of solder balls) | 1 | 1 | 1 | 1 |
| | Temporal stability (difficulty in occurrence of precipitation with time) | 1 | 1 | 1 | I |
| | Change in viscosity of solder paste (suppression of thickening) | 1 | 1 | 1 | 1 |
| | Suppression of blackening of flux residue | 1 | 2 | 1 | 2 |
| | Temporal stability (flux separation with time) | 1 | 1 | 1 | 1 |

In a case where the flux of Examples 77 to 80 to which the present invention was applied was used, it was confirmed that the cohesiveness of the solder alloy powder (difficulty in occurrence of solder balls) was high during reflow, the blackening of the flux residue was suppressed, and the precipitation with time was unlikely to occur and the temporal stability was good.

**[Table 17]**

| Flux | | Comparative Example 10 | Example 81 | Example 82 | Example 83 | Example 84 | Example 85 | Example 86 | Example 87 | Example 88 | Example 89 | Example 90 |
|---|---|---|---|---|---|---|---|---|---|---|---|---|
| Rosin | Acrylic acid-modified hydrogenated rosin | 15 | 15 | 15 | 15 | 15 | 15 | 15 | 15 | 15 | 15 | 15 |
| Polymer (P) | Polybutene (P1) | 0 | 1 | 2 | 4 | 4 | 4 | 4 | 4 | 4 | 6 | 15 |
| Solvent | Tripropylene glycol butyl ether | 30 | 30 | 30 | 5 | 10 | 20 | 30 | 40 | 50 | 30 | 30 |
| | Tetraethylene glycol dimethyl ether | 31 | 30 | 29.5 | 53 | 48 | 38 | 28 | 18 | 8 | 26.5 | 19 |
| Thixotropic agent | Polyamide | 8 | 8 | 7.5 | 7.5 | 7.5 | 7.5 | 7.5 | 7.5 | 7.5 | 7 | 6 |
| | Hydrogenated castor oil | 1 | 1 | 1 | 0.5 | 0.5 | 0.5 | 0.5 | 0.5 | 0.5 | 0.5 | |
| Dicarboxylic acid | Adipic acid | 3 | 3 | 3 | 3 | 3 | 3 | 3 | 3 | 3 | 3 | 3 |
| Compound having benzotriazole skeleton | 1,2,3-Benzotriazole | 4 | 4 | 4 | 4 | 4 | 4 | 4 | 4 | 4 | 4 | 4 |
| Azoles | 2-Phenyl-4-methylimidazole | 5 | 5 | 5 | 5 | 5 | 5 | 5 | 5 | 5 | 5 | 5 |
| Guanidines | 1,3-Di-o-tolylguanidine | 3 | 3 | 3 | 3 | 3 | 3 | 3 | 3 | 3 | 3 | 3 |
| Total/% by mass | | 100 | 100 | 100 | 100 | 100 | 100 | 100 | 100 | 100 | 100 | 100 |
| Polymer (P)/propylene glycol monoalkyl ether, mass ratio | | 0 | 0.033 | 0.067 | 0.80 | 0.40 | 0.20 | 0.13 | 0.10 | 0.080 | 0.20 | 0.50 |
| Evaluation | Wettability | 2 | 2 | 2 | 2 | 2 | 2 | 2 | 2 | 2 | 2 | 2 |
| | Cohesiveness of solder alloy powder (difficulty in occurrence of solder balls) | 1 | 1 | 1 | 1 | 1 | 1 | 1 | 1 | 1 | 1 | 1 |
| | Temporal stability (difficulty in occurrence of precipitation with time) | 4 | 3 | 2 | 1 | 1 | 1 | 1 | 1 | 2 | 1 | 1 |
| | Change in viscosity of solder paste (suppression of thickening) | 1 | 1 | 1 | 3 | 2 | 1 | 1 | 1 | 1 | 1 | 1 |
| | Suppression of blackening of flux residue | 1 | 1 | 1 | 1 | 1 | 1 | 1 | 1 | 1 | 1 | 1 |
| | Temporal stability (flux separation with time) | 1 | 1 | 1 | 1 | 1 | 1 | 1 | 1 | 1 | 1 | 3 |

In a case where the fluxes of Examples 81 to 90 to which the present invention was applied were used, it was confirmed that the cohesiveness of the solder alloy powder (difficulty in occurrence of solder balls) was high during reflow, the blackening of the flux residue was suppressed, and the precipitation with time was unlikely to occur and the temporal stability was good.

In a case where the flux of Comparative Example 10, which lacked the polymer (P), was used, the evaluation of temporal stability (difficulty in occurrence of precipitation with time) was inferior.

**[Table 18]**

| Flux | | Comparative Example 11 | Example 91 | Example 92 | Example 93 | Example 94 | Example 95 | Example 96 |
|---|---|---|---|---|---|---|---|---|
| Rosin | Acrylic acid-modified hydrogenated rosin | 20 | 20 | 20 | 20 | 20 | 20 | 20 |
| Polymer (P) | Polybutene (P1) | 0 | 1 | 1 | 1 | 1 | 1 | 1 |
| Solvent | Tripropylene glycol butyl ether | 30 | 5 | 10 | 20 | 30 | 40 | 50 |
| | Tetraethylene glycol dimethyl ether | 26.5 | 50.5 | 45.5 | 35.5 | 25.5 | 15.5 | 5.5 |
| Thixotropic agent | Polyamide | 7.5 | 7.5 | 7.5 | 7.5 | 7.5 | 7.5 | 7.5 |
| | Hydrogenated castor oil | 1 | 1 | 1 | 1 | 1 | 1 | 1 |
| Dicarboxylic acid | Adipic acid | 3 | 3 | 3 | 3 | 3 | 3 | 3 |
| Compound having benzotriazole skeleton | 1,2,3-Benzotriazole | 4 | 4 | 4 | 4 | 4 | 4 | 4 |
| Azoles | 2-Phenyl-4-methylimidazole | 5 | 5 | 5 | 5 | 5 | 5 | 5 |
| Guanidines | 1,3-Di-o-tolylguanidine | 3 | 3 | 3 | 3 | 3 | 3 | 3 |
| Total/% by mass | | 100 | 100 | 100 | 100 | 100 | 100 | 100 |
| Polymer (P)/propylene glycol monoalkyl ether, mass ratio | | 0 | 0.20 | 0.10 | 0.050 | 0.033 | 0.025 | 0.020 |
| Evaluation | Wettability | 1 | 1 | 1 | 1 | 1 | 1 | 1 |
| | Cohesiveness of solder alloy powder (difficulty in occurrence of solder balls) | 1 | 1 | 1 | 1 | 1 | 1 | 1 |
| | Temporal stability (difficulty in occurrence of precipitation with time) | 4 | 1 | 1 | 2 | 3 | 3 | 3 |
| | Change in viscosity of solder paste (suppression of thickening) | 1 | 3 | 2 | 1 | 1 | 1 | 1 |
| | Suppression of blackening of flux residue | 1 | 1 | 1 | 1 | 1 | 1 | 1 |
| | Temporal stability (flux separation with time) | 1 | 1 | 1 | 1 | 1 | 1 | 1 |

**[Table 19]**

| Flux | | Example 97 | Example 98 | Example 99 | Example 100 | Example 101 | Example 102 | Example 103 |
|---|---|---|---|---|---|---|---|---|
| Rosin | Acrylic acid-modified hydrogenated rosin | 20 | 20 | 20 | 20 | 20 | 20 | 20 |
| Polymer (P) | Polybutene (P1) | 2 | 2 | 2 | 2 | 2 | 2 | 2 |
| Solvent | Tripropylene glycol butyl ether | 5 | 10 | 20 | 30 | 40 | 50 | 55 |
| | Tetraethylene glycol dimethyl ether | 50 | 45 | 35 | 25 | 15 | 5 | 0 |
| Thixotropic agent | Polyamide | 7 | 7 | 7 | 7 | 7 | 7 | 7 |
| | Hydrogenated castor oil | 1 | 1 | 1 | 1 | 1 | 1 | 1 |
| Dicarboxylic acid | Adipic acid | 3 | 3 | 3 | 3 | 3 | 3 | 3 |
| Compound having benzotriazole skeleton | 1,2,3-Benzotriazole | 4 | 4 | 4 | 4 | 4 | 4 | 4 |
| Azoles | 2-Phenyl-4-methylimidazole | 5 | 5 | 5 | 5 | 5 | 5 | 5 |
| Guanidines | 1,3-Di-o-tolylguanidine | 3 | 3 | 3 | 3 | 3 | 3 | 3 |
| Total/% by mass | | 100 | 100 | 100 | 100 | 100 | 100 | 100 |
| Polymer (P)/propylene glycol monoalkyl ether, mass ratio | | 0.40 | 0.20 | 0.10 | 0.067 | 0.050 | 0.040 | 0.036 |
| Evaluation | Wettability | 1 | 1 | 1 | 1 | 1 | 1 | 1 |
| | Cohesiveness of solder alloy powder (difficulty in occurrence of solder balls) | 1 | 1 | 1 | 1 | 1 | 1 | 1 |
| | Temporal stability (difficulty in occurrence of precipitation with time) | 1 | 1 | 1 | 2 | 2 | 3 | 3 |
| | Change in viscosity of solder paste (suppression of thickening) | 3 | 2 | 1 | 1 | 1 | 1 | 1 |
| | Suppression of blackening of flux residue | 1 | 1 | 1 | 1 | 1 | 1 | 1 |
| | Temporal stability (flux separation with time) | 1 | 1 | 1 | 1 | 1 | 1 | 1 |

**[Table 20]**

| Flux | | Example 104 | Example 105 | Example 106 | Example 107 | Example 108 | Example 109 |
|---|---|---|---|---|---|---|---|
| Rosin | Acrylic acid-modified hydrogenated rosin | 20 | 20 | 20 | 20 | 20 | 20 |
| Polymer (P) | Polybutene (P1) | 3 | 3 | 3 | 3 | 3 | 3 |
| Solvent | Tripropylene glycol butyl ether | 5 | 10 | 20 | 30 | 40 | 50 |
| | Tetraethylene glycol dimethyl ether | 49.5 | 44.5 | 34.5 | 24.5 | 14.5 | 4.5 |
| Thixotropic agent | Polyamide | 7 | 7 | 7 | 7 | 7 | 7 |
| | Hydrogenated castor oil | 0.5 | 0.5 | 0.5 | 0.5 | 0.5 | 0.5 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 0.60 | 0.30 | 0.15 | 0.10 | 0.075 | 0.060 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 2 | 2 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 21]**

| Flux | | Example 110 | Example 111 | Example 112 | Example 113 | Example 114 | Example 115 |
|---|---|---|---|---|---|---|---|
| Rosin | Acrylic acid-modified hydrogenated rosin | 20 | 20 | 20 | 20 | 20 | 20 |
| Polymer (P) | Polybutene (P1) | 4 | 4 | 4 | 4 | 4 | 4 |
| Solvent | Tripropylene glycol butyl ether | 5 | 10 | 20 | 30 | 40 | 50 |
| | Tetraethylene glycol dimethyl ether | 48.5 | 43.5 | 33.5 | 23.5 | 13.5 | 3.5 |
| Thixotropic agent | Polyamide | 7 | 7 | 7 | 7 | 7 | 7 |
| | Hydrogenated castor oil | 0.5 | 0.5 | 0.5 | 0.5 | 0.5 | 0.5 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 0.80 | 0.40 | 0.20 | 0.13 | 0.10 | 0.080 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 1 | 2 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 22]**

| Flux | | Example 116 | Example 117 | Example 118 | Example 119 | Example 120 | Example 121 |
|---|---|---|---|---|---|---|---|
| Rosin | Acrylic acid-modified hydrogenated rosin | 20 | 20 | 20 | 20 | 20 | 20 |
| Polymer (P) | Polybutene (P1) | 5 | 5 | 5 | 5 | 5 | 5 |
| Solvent | Tripropylene glycol butyl ether | 5 | 10 | 20 | 30 | 40 | 50 |
| | Tetraethylene glycol dimethyl ether | 48 | 43 | 33 | 23 | 13 | 3 |
| Thixotropic agent | Polyamide | 6.5 | 6.5 | 6.5 | 6.5 | 6.5 | 6.5 |
| | Hydrogenated castor oil | 0.5 | 0.5 | 0.5 | 0.5 | 0.5 | 0.5 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 1.00 | 0.50 | 0.25 | 0.17 | 0.13 | 0.10 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 1 | 1 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 23]**

| Flux | | Example 122 | Example 123 | Example 124 | Example 125 | Example 126 | Example 127 |
|---|---|---|---|---|---|---|---|
| Rosin | Acrylic acid-modified hydrogenated rosin | 20 | 20 | 20 | 20 | 20 | 20 |
| Polymer (P) | Polybutene (P1) | 6 | 6 | 6 | 6 | 6 | 6 |
| Solvent | Tripropylene glycol butyl ether | 5 | 10 | 20 | 30 | 40 | 50 |
| | Tetraethylene glycol dimethyl ether | 47 | 42 | 32 | 22 | 12 | 2 |
| Thixotropic agent | Polyamide | 6.5 | 6.5 | 6.5 | 6.5 | 6.5 | 6.5 |
| | Hydrogenated castor oil | 0.5 | 0.5 | 0.5 | 0.5 | 0.5 | 0.5 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 1.20 | 0.60 | 0.30 | 0.20 | 0.15 | 0.12 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 1 | 1 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 24]**

| Flux | | Example 128 | Example 129 | Example 130 | Example 131 | Example 132 | Example 133 |
|---|---|---|---|---|---|---|---|
| Rosin | Acrylic acid-modified hydrogenated rosin | 20 | 20 | 20 | 20 | 20 | 20 |
| Polymer (P) | Polybutene (P1) | 15 | 15 | 15 | 15 | 15 | 15 |
| Solvent | Tripropylene glycol butyl ether | 5 | 10 | 20 | 30 | 40 | 44.5 |
| | Tetraethylene glycol dimethyl ether | 39.5 | 34.5 | 24.5 | 14.5 | 4.5 | 0 |
| Thixotropic agent | Polyamide | 5.5 | 5.5 | 5.5 | 5.5 | 5.5 | 5.5 |
| | Hydrogenated castor oil | | | | | | |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 3.00 | 1.50 | 0.75 | 0.50 | 0.38 | 0.34 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 1 | 1 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 3 | 3 | 3 | 3 | 3 | 3 |

In a case where the fluxes of Examples 91 to 133 to which the present invention was applied were used, it was confirmed that the cohesiveness of the solder alloy powder (difficulty in occurrence of solder balls) was high during reflow, the blackening of the flux residue was suppressed, and the precipitation with time was unlikely to occur and the temporal stability was good.

In a case where the flux of Comparative Example 11, which lacked the polymer (P), was used, the evaluation of temporal stability (difficulty in occurrence of precipitation with time) was inferior.

**[Table 25]**

| Flux | | Comparative Example 12 | Example 134 | Example 135 | Example 136 | Example 137 | Example 138 | Example 139 |
|---|---|---|---|---|---|---|---|---|
| Rosin | Acrylic acid-modified hydrogenated rosin | 25 | 25 | 25 | 25 | 25 | 25 | 25 |
| Polymer (P) | Polybutene (P1) | 0 | 1 | 1 | 1 | 1 | 1 | 1 |
| Solvent | Tripropylene glycol butyl ether | 30 | 5 | 10 | 20 | 30 | 40 | 50 |
| | Tetraethylene glycol dimethyl ether | 22 | 46 | 41 | 31 | 21 | 11 | 1 |
| Thixotropic agent | Polyamide | 7 | 7 | 7 | 7 | 7 | 7 | 7 |
| | Hydrogenated castor oil | 1 | 1 | 1 | 1 | 1 | 1 | 1 |
| Dicarboxylic acid | Adipic acid | 3 | 3 | 3 | 3 | 3 | 3 | 3 |
| Compound having benzotriazole skeleton | 1,2,3-Benzotriazole | 4 | 4 | 4 | 4 | 4 | 4 | 4 |
| Azoles | 2-Phenyl-4-methylimidazole | 5 | 5 | 5 | 5 | 5 | 5 | 5 |
| Guanidines | 1,3-Di-o-tolylguanidine | 3 | 3 | 3 | 3 | 3 | 3 | 3 |
| Total/% by mass | | 100 | 100 | 100 | 100 | 100 | 100 | 100 |
| Polymer (P)/propylene glycol monoalkyl ether, mass ratio | | 0 | 0.20 | 0.10 | 0.050 | 0.033 | 0.025 | 0.020 |
| Evaluation | Wettability | 1 | 1 | 1 | 1 | 1 | 1 | 1 |
| | Cohesiveness of solder alloy powder (difficulty in occurrence of solder balls) | 1 | 1 | 1 | 1 | 1 | 1 | 1 |
| | Temporal stability (difficulty in occurrence of precipitation with time) | 4 | 1 | 1 | 2 | 3 | 3 | 3 |
| | Change in viscosity of solder paste (suppression of thickening) | 1 | 3 | 2 | 1 | 1 | 1 | 1 |
| | Suppression of blackening of flux residue | 1 | 1 | 1 | 1 | 1 | 1 | 1 |
| | Temporal stability (flux separation with time) | 1 | 1 | 1 | 1 | 1 | 1 | 1 |

**[Table 26]**

| Flux | | Example 140 | Example 141 | Example 142 | Example 143 | Example 144 | Example 145 |
|---|---|---|---|---|---|---|---|
| Rosin | Acrylic acid-modified hydrogenated rosin | 25 | 25 | 25 | 25 | 25 | 25 |
| Polymer (P) | Polybutene (P1) | 2 | 2 | 2 | 2 | 2 | 2 |
| Solvent | Tripropylene glycol butyl ether | 5 | 10 | 20 | 30 | 40 | 50 |
| | Tetraethylene glycol dimethyl ether | 45.5 | 40.5 | 30.5 | 20.5 | 10.5 | 0.5 |
| Thixotropic agent | Polyamide | 6.5 | 6.5 | 6.5 | 6.5 | 6.5 | 6.5 |
| | Hydrogenated castor oil | 1 | 1 | 1 | 1 | 1 | 1 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 0.40 | 0.20 | 0.10 | 0.067 | 0.050 | 0.040 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 2 | 2 | 3 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 27]**

| Flux | | Example 146 | Example 147 | Example 148 | Example 149 | Example 150 | Example 151 |
|---|---|---|---|---|---|---|---|
| Rosin | Acrylic acid-modified hydrogenated rosin | 25 | 25 | 25 | 25 | 25 | 25 |
| Polymer (P) | Polybutene (P1) | 3 | 3 | 3 | 3 | 3 | 3 |
| Solvent | Tripropylene glycol butyl ether | 5 | 10 | 20 | 30 | 40 | 50 |
| | Tetraethylene glycol dimethyl ether | 45 | 40 | 30 | 20 | 10 | 0 |
| Thixotropic agent | Polyamide | 6.5 | 6.5 | 6.5 | 6.5 | 6.5 | 6.5 |
| | Hydrogenated castor oil | 0.5 | 0.5 | 0.5 | 0.5 | 0.5 | 0.5 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 0.60 | 0.30 | 0.15 | 0.10 | 0.075 | 0.060 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 2 | 2 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 28]**

| Flux | | Example 152 | Example 153 | Example 154 | Example 155 | Example 156 | Example 157 |
|---|---|---|---|---|---|---|---|
| Rosin | Acrylic acid-modified hydrogenated rosin | 25 | 25 | 25 | 25 | 25 | 25 |
| Polymer (P) | Polybutene (P1) | 4 | 4 | 4 | 4 | 4 | 4 |
| Solvent | Tripropylene glycol butyl ether | 5 | 10 | 20 | 30 | 40 | 49 |
| | Tetraethylene glycol dimethyl ether | 44 | 39 | 29 | 19 | 9 | 0 |
| Thixotropic agent | Polyamide | 6.5 | 6.5 | 6.5 | 6.5 | 6.5 | 6.5 |
| | Hydrogenated castor oil | 0.5 | 0.5 | 0.5 | 0.5 | 0.5 | 0.5 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 0.80 | 0.40 | 0.20 | 0.13 | 0.10 | 0.082 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 1 | 2 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 29]**

| Flux | | Example 158 | Example 159 | Example 160 | Example 161 | Example 162 | Example 163 |
|---|---|---|---|---|---|---|---|
| Rosin | Acrylic acid-modified hydrogenated rosin | 25 | 25 | 25 | 25 | 25 | 25 |
| Polymer (P) | Polybutene (P1) | 5 | 5 | 5 | 5 | 5 | 5 |
| Solvent | Tripropylene glycol butyl ether | 5 | 10 | 20 | 30 | 40 | 48.5 |
| | Tetraethylene glycol dimethyl ether | 43.5 | 38.5 | 28.5 | 18.5 | 8.5 | 0 |
| Thixotropic agent | Polyamide | 6 | 6 | 6 | 6 | 6 | 6 |
| | Hydrogenated castor oil | 0.5 | 0.5 | 0.5 | 0.5 | 0.5 | 0.5 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 1.00 | 0.50 | 0.25 | 0.17 | 0.13 | 0.10 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 1 | 1 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 30]**

| Flux | | Example 164 | Example 165 | Example 166 | Example 167 | Example 168 | Example 169 |
|---|---|---|---|---|---|---|---|
| Rosin | Acrylic acid-modified hydrogenated rosin | 25 | 25 | 25 | 25 | 25 | 25 |
| Polymer (P) | Polybutene (P1) | 6 | 6 | 6 | 6 | 6 | 6 |
| Solvent | Tripropylene glycol butyl ether | 5 | 10 | 20 | 30 | 40 | 47.5 |
| | Tetraethylene glycol dimethyl ether | 42.5 | 37.5 | 27.5 | 17.5 | 7.5 | 0 |
| Thixotropic agent | Polyamide | 6 | 6 | 6 | 6 | 6 | 6 |
| | Hydrogenated castor oil | 0.5 | 0.5 | 0.5 | 0.5 | 0.5 | 0.5 |
| Dicarboxylic acid | Adipic acid | 3 | 3 | 3 | 3 | 3 | 3 |
| Compound having benzotriazole skeleton | 1,2,3-Benzotriazole | 4 | 4 | 4 | 4 | 4 | 4 |
| Azoles | 2-Phenyl-4-methylimidazole | 5 | 5 | 5 | 5 | 5 | 5 |
| Guanidines | 1,3-Di-o-tolylguanidine | 3 | 3 | 3 | 3 | 3 | 3 |
| Total/% by mass | | 100 | 100 | 100 | 100 | 100 | 100 |
| Polymer (P)/propylene glycol monoalkyl ether, mass ratio | | 1.20 | 0.60 | 0.30 | 0.20 | 0.15 | 0.13 |
| Evaluation | Wettability | 1 | 1 | 1 | 1 | 1 | 1 |
| | Cohesiveness of solder alloy powder (difficulty in occurrence of solder balls) | 1 | 1 | 1 | 1 | 1 | 1 |
| | Temporal stability (difficulty in occurrence of precipitation with time) | 1 | 1 | 1 | 1 | 1 | 1 |
| | Change in viscosity of solder paste (suppression of thickening) | 3 | 2 | 1 | 1 | 1 | 1 |
| | Suppression of blackening of flux residue | 1 | 1 | 1 | 1 | 1 | 1 |
| | Temporal stability (flux separation with time) | 1 | 1 | 1 | 1 | 1 | 1 |

**[Table 31]**

| Flux | | Example 170 | Example 171 | Example 172 | Example 173 | Example 174 |
|---|---|---|---|---|---|---|
| Rosin | Acrylic acid-modified hydrogenated rosin | 25 | 25 | 25 | 25 | 25 |
| Polymer (P) | Polybutene (P1) | 15 | 15 | 15 | 15 | 15 |
| Solvent | Tripropylene glycol butyl ether | 5 | 10 | 20 | 30 | 40 |
| | Tetraethylene glycol dimethyl ether | 35 | 30 | 20 | 10 | 0 |
| Thixotropic agent | Polyamide | 5 | 5 | 5 | 5 | 5 |
| | Hydrogenated castor oil | | | | | |
| Dicarboxylic acid | Adipic acid | 3 | 3 | 3 | 3 | 3 |
| Compound having benzotriazole skeleton | 1,2,3-Benzotriazole | 4 | 4 | 4 | 4 | 4 |
| Azoles | 2-Phenyl-4-methylimidazole | 5 | 5 | 5 | 5 | 5 |
| Guanidines | 1,3-Di-o-tolylguanidine | 3 | 3 | 3 | 3 | 3 |
| Total/% by mass | | 100 | 100 | 100 | 100 | 100 |
| Polymer (P)/propylene glycol monoalkyl ether, mass ratio | | 3.00 | 1.50 | 0.75 | 0.50 | 0.38 |
| Evaluation | Wettability | 1 | 1 | 1 | 1 | 1 |
| | Cohesiveness of solder alloy powder (difficulty in occurrence of solder balls) | 1 | 1 | 1 | 1 | 1 |
| | Temporal stability (difficulty in occurrence of precipitation with time) | 1 | 1 | 1 | 1 | 1 |
| | Change in viscosity of solder paste (suppression of thickening) | 3 | 2 | 1 | I | I |
| | Suppression of blackening of flux residue | 1 | 1 | 1 | 1 | 1 |
| | Temporal stability (flux separation with time) | 3 | 3 | 3 | 3 | 3 |

In a case where the fluxes of Examples 134 to 174 to which the present invention was applied were used, it was confirmed that the cohesiveness of the solder alloy powder (difficulty in occurrence of solder balls) was high during reflow, the blackening of the flux residue was suppressed, and the precipitation with time was unlikely to occur and the temporal stability was good.

In a case where the flux of Comparative Example 12, which lacked the polymer (P), was used, the evaluation of temporal stability (difficulty in occurrence of precipitation with time) was inferior.

Hereinabove, preferable examples of the present invention have been described above, but the present invention is not limited to these examples. Additions, omissions, substitutions, and other modifications can be made without departing from the scope of the present invention. The present invention is not limited by the description above, but is limited only by the appended claims.

### REFERENCE SIGNS LIST

20 Solder paste
22 Solder alloy
26 Land
28 Solder resist
32 Solder alloy
34 Flux residue
40 Container
42 Solder paste
44 Flux

## Claims

1. A flux comprising:
rosin;
a polymer (P) having a repeating unit represented by General Formula (p1);
a solvent;
a thixotropic agent containing polyamide;
a dicarboxylic acid represented by General Formula (c1); and
a compound having a benzotriazole skeleton, which is selected from the group consisting of a compound represented by General Formula (AZ1-1) and a compound represented by General Formula (AZ1-2), 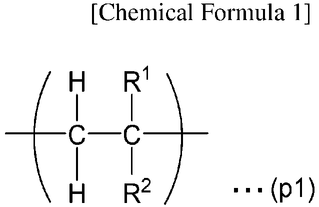
[in the formula, R¹ represents a methyl group or a hydrogen atom, and R² represents a hydrocarbon group having 1 or 2 carbon atoms or a hydrogen atom], 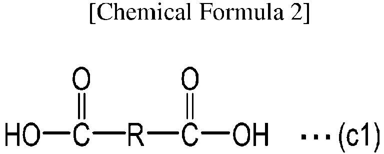
[in the formula, R represents an alkylene group having 1 to 10 carbon atoms, a phenylene group, or a single bond, provided that a methylene group constituting the alkylene group may be substituted with an oxygen atom], 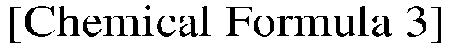 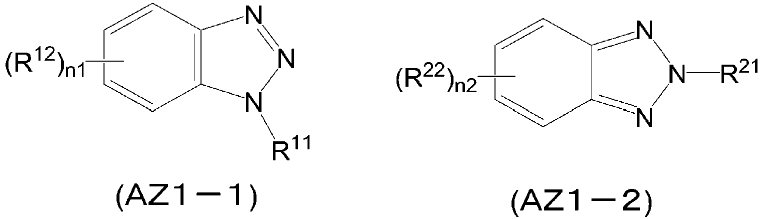
[in the formulae, R¹¹ represents an organic group or a hydrogen atom, R¹² represents a substituent, n1 represents an integer in a range of 0 to 4, R²¹ represents an organic group or a hydrogen atom, R²² represents a substituent, and n2 represents an integer in a range of 0 to 4].

2. The flux according to Claim 1,
wherein a weight-average molecular weight of the polymer (P) is 300 to 8,000.

3. The flux according to Claim 1,
wherein a content of the polymer (P) is 1% by mass or more and 15% by mass or less with respect to a total mass of the flux.

4. The flux according to Claim 1,
wherein the solvent includes propylene glycol monoalkyl ether.

5. The flux according to Claim 4,
wherein the propylene glycol monoalkyl ether includes at least one selected from the group consisting of tripropylene glycol butyl ether and dipropylene glycol butyl ether.

6. The flux according to Claim 4,
wherein a content of the propylene glycol monoalkyl ether is 5% by mass or more and 50% by mass or less with respect to a total mass of the flux.

7. The flux according to Claim 4,
wherein a mixing ratio of the polymer (P) and the propylene glycol monoalkyl ether is 0.05 or more as a mass ratio represented by the polymer (P)/the propylene glycol monoalkyl ether.

8. The flux according to Claim 1,
wherein a content of the dicarboxylic acid is 0.5% by mass or more and 7.5% by mass or less with respect to a total mass of the flux.

9. The flux according to Claim 1,
wherein a content of the compound having a benzotriazole skeleton is 1% by mass or more and 10% by mass or less with respect to a total mass of the flux.

10. The flux according to Claim 1,
wherein a mixing ratio of the dicarboxylic acid and the compound having a benzotriazole skeleton is 0.2 or more and 3 or less as a mass ratio represented by the dicarboxylic acid/the compound having a benzotriazole skeleton.

11. The flux according to Claim 1,
wherein a content of the rosin is 10% by mass or more and 40% by mass or less with respect to a total mass of the flux.

12. The flux according to Claim 1,
wherein the rosin includes at least one selected from the group consisting of an acrylic acid-modified hydrogenated rosin, a hydrogenated rosin, and a polymerized rosin.

13. The flux according to Claim 1,
wherein a content of the thixotropic agent is 2% by mass or more and 15% by mass or less with respect to a total mass of the flux.

14. The flux according to Claim 1, further comprising:
a phenyl group-substituted imidazole.

15. The flux according to Claim 1,
wherein the flux does not contain a halogen compound.

16. A solder paste comprising:
a solder alloy powder; and
the flux according to any one of Claims 1 to 15.

17. The solder paste according to Claim 16,
wherein the solder alloy powder consists of a solder alloy containing Sn and Bi.
